# EUROPÄISCHE PATENTSCHRIFT

(11) **EP 3 668 721 B1**
(45) Veröffentlichungstag und Bekanntmachung des Hinweises auf die Patenterteilung: **29.05.2024**
(21) Anmeldenummer: 18743476.6
(22) Anmeldetag: 19.07.2018
(51) Int. Cl.: B44C 1/17, B29C 37/00, B44C 5/04

(54) **VERFAHREN ZUR HERSTELLUNG EINES FOLIENBESCHICHTETEN ARTIKELS UND FOLIENBESCHICHTETER ARTIKEL**
METHOD FOR PRODUCING A FILM-COATED ARTICLE AND FILM-COATED ARTICLE
PROCÉDÉ DE FABRICATION D'UN ARTICLE REVÊTU D'UN FILM ET ARTICLE REVÊTU D'UN FILM

(30) Priorität: 18.08.2017 DE 102017118904
(43) Veröffentlichungstag der Anmeldung: 24.06.2020
(73) Patentinhaber: Leonhard Kurz Stiftung & Co. KG, 90763 Fürth (DE)
(72) Erfinder: KRATZER, Andreas, 96047 Bamberg (DE); DECKERT, Klaus, 92353 Postbauer-Heng (DE); HAHN, Martin, 91567 Herrieden (DE)
(74) Vertreter: Louis Pöhlau Lohrentz
(86) Internationale Anmeldenummer: PCT/EP2018/069600
(87) Internationale Veröffentlichungsnummer: WO 2019/034361

(56) Entgegenhaltungen:
- EP-A1- 1 149 711
- WO-A1-2017/062822
- DE-A1-102009 022 542
- US-A1- 2008 277 050
- US-A1- 2014 113 115
- US-A1- 2017 210 084

## Beschreibung

Die vorliegende Erfindung betrifft ein Verfahren zur Herstellung eines folienbeschichteten Artikels und einen folienbeschichteten Artikel.

Folienbeschichtete Artikel, beispielsweise Spritzgussartikel, Verfahren zu deren Herstellung, sowie In-Mold-fähige Transferfolien beziehungsweise IMD-Folien (IMD = In-Mold Decoration) sind im Stand der Technik bekannt.

So offenbart die DE 102 21 482 C1 eine Vorrichtung zum Herstellen eines Formteils aus einem aushärtenden Spritzgussmaterial, das durch In-Mold-Spritzgießen mit einer eine Trägerfolie und eine von der Trägerlage ablösbare Dekorlage aufweisenden Prägefolie dekoriert wird. Die Prägefolie wird dabei in eine geöffnete Spritzgussform eingelegt, wobei die Dekorlage der Prägefolie einem Formoberteil zugewandt wird. Die Spritzgussform wird geschlossen und flüssiges Spritzgussmaterial durch einen Einspritzkanal in den Hohlraum der Spritzgussform gespritzt, wobei sich die Prägefolie an die Sichtseite des gespritzten Formteils anschmiegt. Die Prägefolie verbindet sich dabei mit ihrer Dekorlage mit dem Spritzgussmaterial, das nach dem Aushärten aus der Spritzgussform entnommen wird. Nach Abziehen der Trägerfolie von der Dekorlage ist das dekorierte Formteil fertiggestellt. Derartig dekorierte Spritzgussartikel werden insbesondere bei Automobil-Innenteilen wie Türleisten, Leisten in Instrumententafeln, Ganghebelblenden und Mittelkonsolenblenden, bei Automobil-Außenteilen wie Türrammschutzleisten und Abdeckungen an A-, B- und C-Säulen, im Audio- und Video-Bereich bei Dekorleisten an Gehäusen von Radio- und Fernsehgeräten, sowie im Telekommunikationsbereich bei Gehäuseschalen mobiler Geräte wie Handys oder Navigationsgeräte verwendet.

Beim Insert-Molding (Insert Molding = IM) handelt es sich um ein kombiniertes Verfahren aus Heißprägen, Vakuumformung und Guss, insbesondere Spritzguss. Insert-Molding bietet gegenüber dem IMD-Verfahren die Möglichkeit, die Folie stärker zu deformieren. Dies ist von Vorteil, wenn z. B. stark profilierte und geformte Teile benötigt werden. Zunächst wird eine vakuumformbare, dünne Heißprägefolie auf einem Träger, z.B. einer ABS-Folie (Dicke etwa zwischen 200 µm und 750 µm), heißgeprägt (ABS = Acrylnitril-Butadien-Styrol). Dieser heißgeprägte Träger wird unter Hitze vakuumgeformt. Die derart vakuumgeformten Lagen von Heißprägefolie und Träger bilden das sogenannte "Insert" und werden konturgenau ausgeschnitten bzw. -gestanzt. Das "Insert" wird in einer Spritzgussform positioniert, die Form wird mit Kunststoff gefüllt (das "Insert" wird hinterspritzt), dann wird der dekorierte Spritzgussartikel aus der Spritzgussform entnommen.

Die DE 102 36 810 A1 offenbart teilstrukturierte Mehrschichtfolien, die zum Einsatz in Spritzgussformen geeignet sind. Eine derartige IMD-fähige Mehrschichtfolie bzw. eine Mehrschichtfolie zur In-Mold-Dekoration von Spritzgussformteilen weist eine Trägerfolie mit einem dekorativen Element zur Übertragung auf das Spritzgussformteil auf. Die Trägerfolie wird nach Aufbringen des dekorativen Elements auf den Spritzgusskörper entfernt. Das dekorative Element weist eine Ablöseschicht, eine Schutzlackschicht, eine Strukturschicht mit einer räumlichen Struktur, eine Zwischenschicht, eine Reflexionsschicht und eine Klebeschicht auf.

Herkömmliche IM-Folien für den Automobil-Innenbereich besitzen aufgrund der benötigten starken Verdehnungskapazitäten von bis zu 300 % stark thermoplastische Schutzlacksysteme. Diese Schutzlacksysteme zeigen jedoch wegen des hierfür erforderlichen geringen Vernetzungsgrades ihrer Polymerkomponente(n) eine starke Anfälligkeit gegenüber einer Einwirkung von Schweiß und Chemikalien, beispielsweise Sonnen- bzw. Hautschutzcreme- und Insektenschutzmittelbestandteilen. Dies äußert sich in verschiedensten Schadensbildern auf den betroffenen Lackschichten, von Aufquellen über starke Rissbildung bis hin zur völligen Auflösung der Lackierung.

Die WO 2006/021199 A1 betrifft einen dekorierten Spritzgussartikel, welcher aus mindestens einem gespritzten Kunststoffmaterial und mindestens einem damit mechanisch fest verbundenen Dekorelement gebildet ist, welches durch eine Übertragungslage einer Transferfolie gebildet ist und ein Dekor für den Spritzgussartikel bereitstellt, wobei beide Seiten des Dekorelements zumindest teilweise mit mindestens einem spritzgegossenen Kunststoffmaterial bedeckt sind.

Der beidseitige Auftrag von spritzgegossenem Kunststoffmaterial auf dem ersten Dekorelement hat jedoch den Nachteil, dass durch die beim Spritzguss auftretenden hohen Temperaturen und Drücke die Lackschichten der Transferfolie stark beansprucht werden und beschädigt, insbesondere weggeschwemmt werden können.

Ebenfalls bekannt sind Schutzschichten für Heißprägefolien, IMD-Folien, Insert-Molding-Folien. Ziel dieser Schutzschichten ist stets eine sehr hohe Beständigkeit gegen mechanische, jegliche physikalische und chemische Angriffe. Insbesondere soll die Haftung von allen möglichen Fremdstoffen auf der Schutzschicht möglichst gering sein, so dass beispielsweise eine weitere aufgebrachte Schutzschicht keine ausreichende Haftung ausweist.

Aus dem Stand der Technik ist weiterhin das Überfluten von Gegenständen, beispielsweise Spritzgussartikeln, mittels Polyurethan (PU) bekannt. Dafür wird beispielsweise ein zu beschichtender Gegenstand in einem Werkzeug positioniert, das zwei Werkzeughälften aufweist. Eine erste Werkzeughälfte nimmt den zu beschichtender Gegenstand auf und eine zweite Werkzeughälfte bildet eine etwas größere Kavität auf als der zu beschichtende Gegenstand. In diesen Zwischenraum wird PU eingebracht und der zu beschichtende Gegenstand wird mit PU überflutet. Bekannt sind ebenfalls Zweikomponenten-PU-Systeme (2K-PU), die innerhalb von Sekunden nach dem Mischen der Komponenten vor und/oder unmittelbar während des Überflutens aushärten. Öffnet sich das Werkzeug ist das PU bereits ausreichend hart.

DE 10 2009 022 542 A1 beschreibt eine Mehrschichtfolie zur Herstellung eines dekorierten Spritzgussartikels mit einem aus einer Kunststoffspritzmasse gebildeten Grundkörper und mindestens einem auf der Oberfläche des Grundkörpers angeordneten dekorativen Element.

US 2014/0113115 A1 beschreibt eine Transferfolie für ein In-Mold-Verfahren und ein Verfahren zur Herstellung dieser.

US 2008/0277050 A1 beschreibt einen Thermotransferfilm, ein Verfahren zur Herstellung von diesem und ein Transferverfahren.

US 2017/0210084 A1 beschreibt einen Transferfilm, der in In-Mold-Verfahren verwendet wird, und ein Verfahren zum Herstellen des Transferfilms.

WO 2017/062822 A1 beschreibt eine Transferfolie zur Simulation einer Oberflächenerscheinung, sowie ein Verfahren gemäß dem Oberbegriff von Anspruch 1.

Allerdings weisen die aus dem Stand der Technik bekannten Schutzschichten, die durch Überfluten hergestellt wurden, keine ausreichende Haftung auf dem beschichteten Gegenstand auf.

Aufgabe der vorliegenden Erfindung ist es daher, eine Transferfolie mit einer Trägerlage und einer Übertragungslage bereitzustellen, von der es ohne Beschädigung der Übertragungslage möglich ist, die Trägerlage von der Übertragungslage abzuziehen. Gleichzeitig soll nach der Applikation auf ein Substrat bzw. der Verarbeitung der Transferfolie und Entfernen der Trägerlage die Haftkraft der Übertragungslage zu einer nachfolgend aufgebrachten Schutzschicht so groß sein, dass es ohne Beschädigung der Übertragungslage nicht möglich ist, die Schutzschicht von der Übertragungslage und/oder dem beschichteten Substrat abzuziehen.

Die Aufgabe der vorliegenden Erfindung wird durch Bereitstellung einer Verfahrens nach Anspruch 1 zur Herstellung eines folienbeschichteten Artikels gelöst, unter Verwendung einer Transferfolie, wobei die Transferfolie eine Trägerlage und eine auf der Trägerlage angeordnete Übertragungslage, die wenigstens ein Dekorelement enthält, umfasst, wobei das Verfahren folgende Schritte umfasst:
a) Verbinden eines Substrats mit wenigstens einer der Trägerlage abgewandten Oberfläche der Übertragungslage,
b) Entfernen der Trägerlage von der auf dem Substrat gebundenen Übertragungslage, und
c) Aufbringen wenigstens einer Schutzschicht auf eine dem Substrat gegenüberliegenden Oberfläche der Übertragungslage,

wobei die Übertragungslage, angrenzend an die Trägerlage, wenigstens eine Oberschicht aufweist, die zumindest bereichsweise noch nicht vollständig ausgehärtet ist, und die zumindest teilweise die dem Substrat gegenüberliegenden Oberfläche der Übertragungslage bildet, wobei das wenigstens eine Dekorelement auf der der Trägerlage abgewandten Seite der wenigstens einen Oberschicht angeordnet ist, und wobei das Aufbringen der wenigstens einen Schutzschicht auf die Oberfläche der Übertragungslage in Schritt c) durch zumindest teilweises Überfluten und/oder Übergießen der wenigstens einen Oberschicht mit wenigstens einer Zusammensetzung aus Polyurethan-Vorläufern (2K-PUR Systemen) und nachfolgendem Härten erfolgt,
wobei die wenigstens eine Schutzschicht auf der wenigstens einen Oberschicht der Übertragungslage nach dem Aushärten mit einer Haftkraft, bestimmt gemäß der in DIN EN ISO 4624: 2016-08 beschriebenen Methode, aus einem Bereich von 2,5 MPa bis 10 Mpa haftet.

Bevorzugte Ausführungsformen des erfindungsgemäßen Verfahrens sind in den abhängigen Ansprüchen 2 bis 14 angegeben.

Die Oberschicht weist vorzugsweise wenigstens ein Bindemittel, das aus der Gruppe, die aus Polyurethanharzen, Polyurethandispersionen, Acrylharzen, Methacrylharzen, Phenolharzen, Epoxidharzen, Polyharnstoffen, Melaminharzen, Aminoplasten, Polyesterharzen, Alkydharzen, Polyamidharzen, Vinylesterharzen und Mischungen davon, vorzugsweise Polyurethanharzen, Polyurethandispersionen, Phenolharzen, Epoxidharzen, Polyharnstoffen, Melaminharzen, Aminoplasten, Polyesterharzen, Alkydharzen, Polyamidharzen und Mischungen davon, besteht, ausgewählt wird, auf.

Die Aufgabe der vorliegenden Erfindung wird weiterhin durch Bereitstellung eines folienbeschichteten Artikels nach Anspruch 15 gelöst, hergestellt durch ein Verfahren nach einem der Ansprüche 1 bis 14.

Die Transferfolie umfasst eine Trägerlage und eine auf der Trägerlage angeordnete Übertragungslage, die wenigstens ein Dekorelement enthält, wobei die Übertragungslage vorzugsweise lösbar auf der Trägerlage angeordnet ist.

Die Transferfolie wird vorzugsweise zur Übertragung einer Übertragungslage auf ein Objekt verwendet, wobei wenigstens eine Oberfläche des Objektes zumindest teilweise mit wenigstens einer, der Trägerlage abgewandten Oberfläche der Übertragungslage verbunden wird, unter Erhalt eines beschichteten Objektes.

Nach dem Anordnen der Übertragungslage auf zumindest Teilbereichen der wenigstens einen Oberfläche des Objekts wird vorzugsweise die Trägerlage von der Übertragungslage, vorzugsweise vollständig, entfernt, so dass lediglich die Übertragungslage auf zumindest Teilbereichen der Oberfläche des beschichteten Objektes angeordnet ist, vorzugsweise zumindest teilweise die Oberfläche des beschichteten Objektes bildet.

Dabei erfolgt das Ablösen der Trägerlage von der Übertragungslage vorzugsweise an einer Schichtgrenze zwischen der Trägerlage und der Übertragungslage.

Zusammen mit der Übertragungslage wird wenigstens ein Dekorelement auf das Objekt übertragen, wobei das wenigstens eine Dekorelement nach dem Übertragen der Übertragungslage und dem Entfernen der Transferlage auf zumindest Teilbereichen der Oberfläche des beschichteten Objektes angeordnet ist und, je nach Ausgestaltung des wenigstens einen Dekorelements, die physikalischen Eigenschaften, vorzugsweise die haptischen, optischen, elektrischen und/oder mechanischen Eigenschaften, und/oder die chemischen Eigenschaften der Oberfläche des beschichteten Objektes beeinflussen kann.

Beispielsweise kann das wenigstens eine Dekorelement die Oberflächentextur und/oder Farbe des beschichteten Objektes, beispielsweise durch Bereitstellung von Prägungen, Aufrauungen, Mustern oder einer Glätte und/oder durch Bereitstellung von reflexionsbestimmenden Eigenschaften wie Transparenz, Glanz oder Mattierung und/oder durch Bereitstellung einer Farbe, beeinflussen.

Beispielsweise kann das wenigstens eine Dekorelement die mechanischen Eigenschaften des beschichteten Objektes, beispielsweise durch Bereitstellung einer Oberflächenhärte, Oberflächenelastizität und/oder Bruchfestigkeit der Oberfläche, beeinflussen.

Beispielsweise kann das wenigstens eine Dekorelement die chemischen Eigenschaften des beschichteten Objektes, beispielsweise durch Bereitstellung einer Beständigkeit der Oberfläche gegenüber der Einwirkung von Säuren und/oder Basen, beeinflussen.

Das wenigstens eine Dekorelement kann vorzugsweise als Motiv, als Dekor, beispielsweise Einzelbilddekor oder Endlosdekor, als Muster, oder einer Kombination davon ausgebildet sein.

Beispielsweise kann das wenigstens eine Dekorelement als optisch aktive bzw. optische Effekte erzeugende Oberflächenstruktur ausgebildet sein, wobei vorzugsweise eine geeignete Oberflächenstruktur aus der Gruppe, die aus diffraktiver Oberflächenstruktur, insbesondere Hologramm, Beugungsstruktur Nullter Ordnung, Mattstruktur, insbesondere isotrope oder anisotrope Mattstruktur, Blaze-Gitter, Linsenstruktur, Mikrolinsenstruktur, Mikroprismenstruktur, Mikrospiegelstruktur, oder einer Kombination zwei oder mehrerer dieser Oberflächenstrukturen besteht, ausgewählt wird.

Beispielsweise kann das wenigstens eine Dekorelement als optisch aktiver und/oder optisch variabler Stoff ausgebildet sein, der vorzugsweise als Farbstoff, Flüssigkristallmaterial, Pigment, oder einer Mischung davon vorliegen. Geeignete Pigmente sind beispielsweise Interferenzschichtpigmente, Flüssigkristallpigmente, diffraktive Pigmente, metallische Pigmente, thermochrome Pigmente, photochrome Pigmente oder Mischungen davon. Der Stoff kann insbesondere in unterschiedlichen Wellenlängenbereichen, beispielsweise im Infrarot-Bereich, im Ultraviolett-Bereich und sichtbaren Bereich jeweils unterschiedliche oder auch gleichartige optische Effekte zeigen. Der Stoff kann insbesondere auch unter unterschiedlichen Beleuchtungs- und/oder Betrachtungswinkeln oder -richtungen jeweils unterschiedliche oder auch gleichartige optische Effekte zeigen.

Vorzugsweise ist das wenigstens eine Dekorelement in wenigstens einer Dekorschicht angeordnet, die weiter bevorzugt jeweils unabhängig voneinander einen UV-vernetzten Lack und/oder eine thermoplastisch verformbare Schicht umfasst und die jeweils unabhängig voneinander unpigmentiert oder pigmentiert oder eingefärbt ist.

Vorzugsweise wird die wenigstens eine Dekorschicht aus der Gruppe, die aus zumindest partiell angeordnete Metallschichten, zumindest partiell angeordnete Schichten mit Reliefstrukturen, zumindest partiell angeordnete Farbschichten, zumindest partiell angeordnete Interferenzschichten oder Kombinationen davon besteht, ausgewählt.

Weiter bevorzugt wird die wenigstens eine Dekorschicht aus der Gruppe, die aus transparenten und/oder farbigen Lackschichten, insbesondere umfassend ein oder mehrere Farbstoffe und/oder Pigmente, Replizierschichten mit abgeformter optisch aktiver Oberflächenstruktur, Reflexionsschichten, insbesondere opaken Reflexionsschichten, transparenten Reflexionsschichten, metallischen Reflexionsschichten oder dielektrischen Reflexionsschichten, optisch variablen Schichten, optisch aktiven Schichten, Interferenz-Mehrschichtsystemen, Volumenhologrammschichten, Flüssigkristallschichten, insbesondere cholesterischen Flüssigkristallschichten, elektrisch leitfähigen Schichten, Antennenschichten, Elektrodenschichten, magnetischen Schichten, Magnetspeicherschichten, Barriereschichten und Kombinationen davon besteht, ausgewählt.

Weiter bevorzugt weist die wenigstens eine Dekorschicht eine Schichtdicke auf, die jeweils unabhängig voneinander in einem Bereich von 0,1 µm bis 15 µm, weiter bevorzugt in einem Bereich von 4 bis 8 µm, beträgt.

Die Übertragungslage der Transferfolie weist, angrenzend an die Trägerlage, wenigstens eine Oberschicht, die zumindest bereichsweise noch nicht vollständig ausgehärtet ist, auf, wobei das wenigstens eine Dekorelement, vorzugsweise in wenigstens einer der vorgenannten Dekorschichten, auf der der Trägerlage abgewandten Seite der wenigstens einen Oberschicht der Übertragungslage angeordnet ist.

Als "noch nicht vollständig ausgehärtet" im Sinne der vorliegenden Erfindung wird eine Schicht bezeichnet, wenn höchstens 90 %, vorzugsweise höchstens 95 %, der zu einer Vernetzung fähigen funktionellen Gruppen von in der wenigstens einen, zumindest bereichsweise noch nicht vollständig ausgehärteten Oberschicht enthaltenen Polymere oder Polymermischungen, vorzugsweise Bindemittel oder Bindemittelmischungen, eine Vernetzung aufweisen.

Vorzugsweise weist die wenigstens eine, zumindest bereichsweise noch nicht vollständig ausgehärtete Oberschicht freie, reaktive Gruppen und/oder verkappte, reaktive Gruppen, die bei einer Temperatur aus einem Bereich von 30°C bis 180°C die entsprechende reaktive Gruppe wieder freisetzen, auf.

Unter dem Begriff "freie, reaktive Gruppe" wird vorzugsweise eine funktionelle Gruppe verstanden, die bei einer Polymerisierungsreaktion eine kovalente Bindung ausbilden kann.

Geeignete reaktive Gruppen sind vorzugsweise Isocyanat-Gruppen (-NCO) und/oder gegenüber Isocyanat-Gruppen reaktionsfähige Gruppen, vorzugsweise Amino-Gruppen (-NH₂) und/oder Hydroxy-Gruppen (-OH).

Vorzugsweise sind verkappte, reaktive Gruppen, die auch als blockierte, reaktive Gruppen bezeichnet werden können, Additionsverbindungen von Blockierungsmitteln und vorgenannten reaktiven Gruppen, die bei einer Temperatur aus einem Bereich von 30°C bis 180°C, vorzugsweise bei einer Temperatur aus einem Bereich von 40°C bis 160°C, weiter bevorzugt bei einer Temperatur aus einem Bereich von 60°C bis 140°C, die entsprechende reaktive Gruppe wieder freisetzen.

Verkappte, reaktive Gruppen sind vorzugsweise verkappte Isocyanat-Gruppen, die bei einer Temperatur aus einem Bereich von 30°C bis 180°C die entsprechende reaktive Gruppe, vorzugsweise Isocyanat-Gruppe, wieder freisetzen.

Beispielsweise kann die wenigstens eine, zumindest bereichsweise noch nicht vollständig ausgehärtete Oberschicht freie, reaktive Isocyanat-Gruppen enthalten. Freie, reaktive Isocyanat-Gruppen können in Gegenwart von Wasser, beispielsweise Luftfeuchtigkeit, unter Bildung einer Carbamidsäure reagieren, die weitere Polymerisierungsreaktionen eingehen kann.

Daher wird vorzugsweise durch Anordnung einer Trägerlage, die wenigstens eine Trägerschicht aus einem Polyester, einem Polyolefin oder einer Kombination davon, insbesondere aus PET, umfasst, auf der wenigstens einen, zumindest bereichsweise noch nicht vollständig ausgehärteten Oberschicht der Übertragungslage das Eindringen von Wasser, beispielsweise Luftfeuchtigkeit, in die wenigstens eine, zumindest bereichsweise noch nicht vollständig ausgehärtete Oberschicht unterdrückt, vorzugsweise verhindert.

Weiter bevorzugt weist die wenigstens eine, zumindest bereichsweise noch nicht vollständig ausgehärtete Oberschicht keine freien, ethylenisch ungesättigten Gruppen auf.

Vorzugsweise kann die Trägerschicht als endlose Folie oder als vereinzeltes Folienblatt ausgebildet sein. Ein solches Folienblatt kann aus einer zuvor endlos vorliegenden Folie durch Vereinzelung gewonnen werden.

Vorzugsweise weist die wenigstens eine Trägerschicht eine Schichtdicke von 10 µm bis 75 µm, weiter bevorzugt von 23 µm bis 40 µm, auf.

Weiter bevorzugt ist die Trägerlage, vorzugsweise die wenigstens eine Trägerschicht aus einem Polyester, einem Polyolefin oder einer Kombination davon, insbesondere aus PET, auf der wenigstens einen, zumindest bereichsweise noch nicht vollständig ausgehärteten Oberschicht der Übertragungslage mit einer Haftkraft, vorzugsweise bestimmt mit einem Messgerät Z006 der Fa. Zwick, aus einem Bereich von 2 cN bis 50 cN, vorzugsweise aus einem Bereich von 5 cN bis 35 cN, angeordnet.

Bei der Messung der Haftkraft der Trägerlage auf der wenigstens einen Oberschicht mit einem Messgerät Z006 der Fa. Zwick, wird vorzugsweise in einem ersten Schritt ein beschichteter Prüfkörper durch haftfestes Applizieren einer Transferfolie in einer Breite von 3,5 cm auf eine Kunststoffplatte als Testsubstrat mittels Heißprägen hergestellt.

Während der Messung wird vorzugsweise in einem zweiten Schritt die Trägerlage über eine Länge von 100 mm senkrecht von dem, vorzugsweise horizontal angeordneten, Prüfkörper abgezogen. Dabei werden vorzugsweise die benötigten Kräfte im Bereich der Länge von 10 mm bis 90 mm der aufgebrachten Trägerfolie mit einem Messgerät Z006 der Zwick GmbH & Co. KG (Ulm, DE) gemessen.

Zur Messung der Haftkraft der Trägerlage wird das vorgenannte Messgerät Z006 vorzugsweise mit einer waagerechten Substrataufnahme kombiniert. Die Substrataufnahme weist vorzugsweise einen beweglichen Schlitten auf, auf dem ein Testsubstrat befestigt ist. Auf dem Testsubstrat ist vorzugsweise die Transferfolie, insbesondere mittels Heißprägen, appliziert. Die Trägerlage der applizierten Transferfolie wird vorzugsweise aus der Waagerechten mittels Umlenkrolle in die Senkrechte umgelenkt und an dem vorgenannten Messgerät befestigt. Während der Messung und der vorzugsweise senkrecht möglichst gleichmäßig wirkenden Kraft des Messgeräts auf die Trägerlage wird der Schlitten mit dem Testsubstrat entsprechend so bewegt bzw. gezogen, dass ein Abziehen der Trägerlage von der auf das Testsubstrat applizierten Übertragungslage möglich ist.

Die Ausgestaltung der wenigstens einen Trägerschicht aus einem Polyester, einem Polyolefin oder einer Kombination davon, insbesondere aus Polyethylenterephthalat (PET), führt zu einer signifikanten Reduzierung der Haftung der wenigstens einen Trägerschicht auf der wenigstens einen, zumindest bereichsweise noch nicht vollständig ausgehärteten Oberschicht der Übertragungslage, da sich beide Schichten stark in ihrem chemischen Aufbau unterscheiden.

Vorzugsweise sind die molekularen Wechselwirkungen zwischen der Trägerschicht aus dem oben angegebenen Material und der wenigstens einen, zumindest bereichsweise noch nicht vollständig ausgehärteten Oberschicht der Übertragungslage extrem schwach ausgeprägt.

Die Trägerlage, vorzugsweise die wenigstens eine Trägerschicht aus einem Polyester, einem Polyolefin oder einer Kombination davon, insbesondere aus PET, lässt sich somit leicht von der Übertragungslage, vorzugsweise ohne Beschädigung der Übertragungslage, lösen, beispielsweise nach der Applikation der Transferfolie auf ein Substrat und/oder der Verarbeitung der Transferfolie mittels Heißprägen oder Spritzgießen, beispielsweise 3DHS (3DHS = 3D Hot Stamping), IMD-Verfahren, Insert-Molding-Verfahren, IPD-Skin-Verfahren.

Es ist weiter vorteilhaft, wenn die Transferfolie zumindest teilweise eine Ablöseschicht, insbesondere aus einem Wachs, mit einer Schichtdicke von 1 nm bis 50 nm, bevorzugt von 1 nm bis 20 nm aufweist, die zwischen der wenigstens einen Trägerschicht und der wenigstens einen, zumindest bereichsweise noch nicht vollständig ausgehärteten Oberschicht angeordnet ist. Eine solche Ablöseschicht erleichtert das Ablösen der Trägerlage nach dem Übertragen der Absorptionsschicht auf ein Substrat.

Dabei erfolgt weiter bevorzugt die Ablösung der Trägerlage von der Übertragungslage an einer Schichtgrenze zwischen der Ablöseschicht und der wenigstens einen, zumindest bereichsweise noch nicht vollständig ausgehärteten Oberschicht der Übertragungslage. Vorteilhafterweise verbleibt die wachsbasierte Ablöseschicht dabei auf der Trägerlage.

Nach dem, vorzugsweise vollständigen, Entfernen der Trägerlage in Schritt b) des erfindungsgemäßen Verfahrens erfolgt, vorzugsweise unmittelbar, in Schritt c) das Aufbringen wenigstens einer Schutzschicht auf die wenigstens eine, zumindest bereichsweise noch nicht vollständig ausgehärtete Oberschicht durch zumindest teilweises Überfluten und/oder Übergießen der wenigstens einen Oberschicht mit wenigstens einer Zusammensetzung aus Polyurethan-Vorläufern (2K-PUR Systemen) und nachfolgendem Härten, vorzugsweise bei einer Temperatur aus einem Bereich von 25°C bis 180°C.

Dabei wird vorzugsweise die wenigstens eine, zumindest bereichsweise noch nicht vollständig ausgehärtete Oberschicht und/oder die darauf aufgebrachte Schutzschicht ausgehärtet, vorzugsweise vollständig ausgehärtet.

Weiter bevorzugt wird dabei die wenigstens eine, zumindest bereichsweise noch nicht vollständig ausgehärtete Oberschicht und die darauf aufgebrachte Schutzschicht ausgehärtet, vorzugsweise vollständig ausgehärtet.

Die auf die wenigstens eine, zumindest bereichsweise noch nicht vollständig ausgehärtete Oberschicht der Übertragungslage aufgebrachte wenigstens eine Zusammensetzung aus Polyurethan-Vorläufern (2K-PUR Systemen) weist vorzugsweise ebenfalls freie, reaktive Gruppen und/oder verkappte, reaktive Gruppen, die bei einer Temperatur aus einem Bereich von 30°C bis 180°C die entsprechende reaktive Gruppe wieder freisetzen, auf.

Bei der Aushärtung, vorzugsweise vollständigen Aushärtung, der wenigstens einen, zumindest bereichsweise noch nicht vollständig ausgehärteten Oberschicht der Übertragungslage und/oder der darauf aufgebrachten Schutzschicht können daher beispielsweise freie Isocyanat-Gruppen, die in der Oberschicht der Übertragungslage enthalten sind, mit freien, gegenüber Isocyanat-Gruppen reaktionsfähigen Gruppen der zur Herstellung der wenigstens einen Schutzschicht verwendeten Zusammensetzung aus Polyurethan-Vorläufern (2K-PUR Systemen) reagieren.

Weist die wenigstens eine, zumindest bereichsweise noch nicht vollständig ausgehärtete Oberschicht der Übertragungslage beispielsweise freie, gegenüber Isocyanat-Gruppen reaktionsfähige Gruppen auf, können diese entsprechend mit freien Isocyanat-Gruppen der zur Herstellung der wenigstens einen Schutzschicht verwendeten Zusammensetzung aus Polyurethan-Vorläufern (2K-PUR Systemen) reagieren.

Dadurch wird jeweils vorzugsweise die Haftung der wenigstens einen Schutzschicht auf der wenigstens einen Oberschicht der Übertragungslage nach dem Aushärten in Schritt c) des erfindungsgemäßen Verfahrens signifikant verbessert.

Weist die wenigstens eine, zumindest bereichsweise noch nicht vollständig ausgehärtete Oberschicht beispielsweise verkappte, reaktive Gruppen auf, setzen diese im erfindungsgemäßen Verfahren vorzugsweise in Schritt c), vorzugsweise bei einer Temperatur aus einem Bereich von 30°C bis 180°C, die entsprechenden reaktiven Gruppen wieder frei. Anschließend können beispielsweise freigesetzte Isocyanat-Gruppen, die in der wenigstens einen Oberschicht der Übertragungslage enthalten sind, ebenfalls mit freien, gegenüber Isocyanat-Gruppen reaktionsfähigen Gruppen der zur Herstellung der wenigstens einen Schutzschicht verwendeten Zusammensetzung aus Polyurethan-Vorläufern (2K-PUR Systemen) reagieren.

Dadurch wird vorzugsweise die Haftung der wenigstens einen Schutzschicht auf der Oberschicht der Übertragungslage signifikant verbessert, wobei vorzugsweise weiterhin durch das Vorhandensein von verkappten, reaktiven Gruppen, beispielsweise verkappten Isocyanat-Gruppen, in der wenigstens einen, zumindest bereichsweise noch nicht vollständig ausgehärteten Oberschicht der Übertragungslage der Transferfolie die Lagerstabilität der Transferfolie erhöht werden kann.

Die wenigstens eine Schutzschicht auf der wenigstens einen Oberschicht der Übertragungslage haftet nach dem Aushärten mit einer Haftkraft, bestimmt gemäß der in DIN EN ISO 4624: 2016-08 beschriebenen Methode, vorzugsweise mit einem Haftzugprüfgerät PosiTest^{®} AT Serie der Fa. DeFelsko Corporation (Ogdensburg, NY, USA) unter Verwendung eines 20 mm-Prüfstempels, aus einem Bereich von 2,5 MPa bis 10 MPa, insbesondere von 2,5 MPa bis 5 MPa.

Daher kann die wenigstens eine Schutzschicht nach dem Aushärten nicht ohne Beschädigung der Übertragungslage und/oder Ablösen der Übertragungslage von dem entsprechenden Substrat von einem erfindungsgemäßen folienbeschichteten Gegenstand abgelöst werden.

Weiterhin wird insbesondere durch das Aufbringen der Schutzschicht in Schritt c) des erfindungsgemäßen Verfahrens durch zumindest teilweises Überfluten und/oder Übergießen der wenigstens einen, zumindest bereichsweise noch nicht vollständig ausgehärteten Oberschicht der Übertragungslage mit einer Zusammensetzung aus Polyurethan-Vorläufern (2K-PUR Systemen) eine einfaches Verfahren zur Herstellung der wenigstens einen Schutzschicht bereitgestellt.

Das Überfluten und/oder Übergießen erlaubt vorzugsweise die Verwendung einer großen Anzahl von verschiedenen Zusammensetzungen aus Polyurethan-Vorläufern (2K-PUR Systemen), die beispielsweise spezifisch auf die Zusammensetzung der wenigstens einen, zumindest bereichsweise noch nicht vollständig ausgehärteten Oberschicht der Übertragungslage und/oder auf die von der wenigstens einen Schutzschicht zu erfüllenden Eigenschaften, beispielsweise hinsichtlich optischer Eigenschaften, mechanischer Eigenschaften und/oder chemischer Beständigkeit, abgestimmt werden können.

Wie vorstehend erläutert weist die wenigstens eine, zumindest bereichsweise noch nicht vollständig ausgehärtete Oberschicht vorzugsweise freie, reaktive Gruppen und/oder verkappte, reaktive Gruppen, die bei einer Temperatur aus einem Bereich von 30°C bis 180°C die entsprechende reaktive Gruppe wieder freisetzen, auf.

Methoden zur Bestimmung des Gehalts an freien Amino-Gruppen, Hydroxy-Gruppen und/oder Isocyanat-Gruppen in Rohstoffen zur Herstellung von Kunststoffen sind im Stand der Technik bekannt.

Geeignete Verfahren zur Bestimmung des Gehalts an freien Hydroxy-Gruppen werden beispielsweise in ASTM E1899-16 ("Standard Test Method for Hydroxyl Groups Using Reaction with p-Toluenesulfonyl Isocyanate (TSI) and Potentiometric Titration with Tetrabutylammonium Hydroxide", 2016, ASTM International, West Conshohocken, PA, USA), ASTM D4273-11 ("Standard Test Method for Polyurethane Raw Materials: Determination of Primary Hydroxyl Content of Polyether Polyols", 2011, ASTM International, West Conshohocken, PA, USA), DIN 53240-3:2016-03 ("Bindemittel für Beschichtungsstoffe - Bestimmung der Hydroxylzahl - Teil 3: Schnellverfahren", Ausgabedatum: 2016-03), ISO 14900:2017-03 ("Plastics - Polyols for use in the production of polyurethane - Determination of hydroxyl number", Ausgabedatum: 2017-03) oder ASTM D4274-16 ("Standard Test Methods for Testing Polyurethane Raw Materials: Determination of Hydroxyl Numbers of Polyols", 2016, ASTM International, West Conshohocken, PA, USA) beschrieben.

Geeignete Verfahren zur Bestimmung des Gehalts an freien Isocyanat-Gruppen werden beispielsweise in DIN EN ISO 14896:2009-07 ("Kunststoffe - Polyurethanrohstoffe - Bestimmung des Isocyanatanteils", Ausgabedatum 2009-07) oder ASTM D2572-97(2010) ("Standard Test Method for Isocyanate Groups in Urethane Materials or Prepolymers", 2010, ASTM International, West Conshohocken, PA, USA) beschrieben.

Ein geeignetes Verfahren zur Bestimmung des Gehalts an freien Amino-Gruppen wird beispielsweise in ASTM D2074-07(2013) ("Standard Test Methods for Total, Primary, Secondary, and Tertiary Amine Values of Fatty Amines by Alternative Indicator Method", 2013, ASTM International, West Conshohocken, PA, USA) beschrieben.

Vorzugsweise sind freie, reaktive Gruppen, vorzugsweise freie Isocyanat-Gruppen und/oder freie gegenüber Isocyanat-Gruppen reaktionsfähige Gruppen, vorzugsweise Amino-Gruppen und/oder Hydroxy-Gruppen, oder entsprechend verkappte Analoge der wenigstens einen, zumindest bereichsweise noch nicht vollständig ausgehärteten Oberschicht an in der Schicht enthaltene Monomere, Prepolymere und/oder Mischungen davon gebunden.

Weiter bevorzugt sind freie, reaktive Gruppen, vorzugsweise freie Isocyanat-Gruppen und/oder freie gegenüber Isocyanat-Gruppen reaktionsfähige Gruppen, vorzugsweise Amino-Gruppen und/oder Hydroxy-Gruppen, und/oder entsprechend verkappte Analoge davon der wenigstens einen, zumindest bereichsweise noch nicht vollständig ausgehärteten Oberschicht an in der Oberschicht enthaltene Bindemittel, Vernetzungsmittel und/oder Mischungen davon gebunden.

Die wenigstens eine, zumindest bereichsweise noch nicht vollständig ausgehärtete Oberschicht umfasst vorzugsweise wenigstens ein Bindemittel, das freie Isocyanat-Gruppen und/oder freie gegenüber Isocyanat-Gruppen reaktionsfähige Gruppen, vorzugsweise Amino-Gruppen und/oder Hydroxy-Gruppen, und/oder jeweils entsprechend verkappte Analoge davon aufweist.

Geeignete Bindemittel werden vorzugsweise aus der Gruppe, die aus Polyurethanharzen, Polyurethandispersionen, Phenolharzen, Epoxidharzen, Polyharnstoffen, Melaminharzen, Aminoplasten, Polyesterharzen, Alkydharzen, Polyamidharzen und Mischungen davon, weiter bevorzugt Polyurethanharzen, Polyurethandispersionen, Phenolharzen, Polyharnstoffen, Melaminharzen, Aminoplasten, Polyesterharzen, Alkydharzen, Polyamidharzen und Mischungen davon, besteht, ausgewählt.

Weiter bevorzugt umfasst die wenigstens eine, zumindest bereichsweise noch nicht vollständig ausgehärtete Oberschicht das wenigstens eine Bindemittel, das freie Isocyanat-Gruppen und/oder freie gegenüber Isocyanat-Gruppen reaktionsfähige Gruppen, vorzugsweise Amino-Gruppen und/oder Hydroxy-Gruppen, und/oder jeweils entsprechend verkappte Analoge davon aufweist, in einem Anteil von mindestens 15 Gew.-%, vorzugsweise aus einem Bereich von 20 Gew.-% bis 90 Gew.%, jeweils bezogen auf das Gesamtgewicht der Schicht.

Weiter bevorzugt weist das wenigstens eine Bindemittel, das in der wenigstens einen, zumindest bereichsweise noch nicht vollständig ausgehärteten Oberschicht enthalten ist, keine freien, ethylenisch ungesättigten Gruppen auf.

Bei einer bevorzugten Ausführungsform umfasst die wenigstens eine, zumindest bereichsweise noch nicht vollständig ausgehärtete Oberschicht, wenigstens eine wässrige, unvernetzte oder vernetzte Polyurethan-Dispersion, die vorzugsweise freie, gegenüber Isocyanat-Gruppen reaktionsfähige Gruppen, weiter bevorzugt Amino-Gruppen und/oder Hydroxy-Gruppen, aufweist, oder wenigstens ein, unvernetztes oder vernetztes Polyurethan-Harz, das vorzugsweise Isocyanat-Gruppen und/oder verkappte Analoge davon oder gegenüber Isocyanat-Gruppen reaktionsfähige Gruppen, weiter bevorzugt Amino-Gruppen und/oder Hydroxy-Gruppen, und/oder jeweils entsprechend verkappte Analoge davon aufweist, oder besteht daraus.

Verkappte, reaktive Gruppen können auch als verkappte Analoge vorgenannter freier, gegenüber Isocyanat-Gruppen reaktionsfähiger Gruppen oder verkappte Analoge vorgenannter Isocyanat-Gruppen bezeichnet werden.

Geeignete Verbindungen mit verkappten, reaktiven Gruppen sind im Stand der Technik bekannt und umfassen beispielsweise Isocyanat-Gruppen, die durch Addition von organischen Verbindungen mit aciden H-Atomen, sogenannte Blockierungsmittel, blockiert (gekappt) wurden.

Geeignete Blockierungsmittel mit aciden H-Atomen sind beispielsweise Malonsäuredialkylester mit Alkylgruppen, die jeweils gleich oder voneinander verschieden sein können und 1 bis 4 Kohlenstoffatome aufweisen, Acetessigsäurealkylester mit einer Alkylgruppe, die 1 bis 4 Kohlenstoffatome aufweist, Phenol-Derivate, sekundäre Amine, Lactame, Pyrazole, Oxime oder Mischungen davon.

Beispiele geeigneter Malonsäuredialkylester sind Malonsäuredimethylester, Malonsäurediethylester, Malonsäurediisopropylester, Malonsäure-di-tert.-butyl-ester und Mischungen davon.

Beispiele geeigneter Acetessigsäurealkylester sind Acetessigsäuremethylester, Acetessigsäureethylster, Acetessigsäureisopropylester, Acetessigsäure-tert.-butylester und Mischungen davon.

Beispiele geeigneter Phenol-Derivate sind Phenol, Kresole, Nonylphenole und Mischungen davon.

Beispiele geeigneter sekundäre Amine sind N-Isopropyl-N-methylamin, N-Isopropyl-N-ethylamin, N-tert-Butyl-N-methylamin, N-tert-Butyl-N-isopropylamin, N,N-Diisopropylamin, N-tert-Butyl-N-benzylamin (BEBA), N,N-Dicyclohexylamin und Mischungen davon.

Ein Beispiel geeigneter Lactame ist ε-Caprolactam. Ein Beispiel geeigneter Pyrazole ist 3,5-Dimethylpyrazol (DMP).

Beispiele geeigneter Oxime sind aromatische Aldoxime, aliphatische, cycloaliphatische oder aromatische Ketoxime und Mischungen davon. Beispiele geeigneter aromatischer Aldoxime sind Benzaldoxim, Tolylaldoxim, Terephthaldialdoxim, Isophthaldialdoxim und Mischungen davon. Geeignete Ketoxime sind beispielsweise Acetonoxim, Methylethylketoxim, Methylpropylketoxim, 2-Butanonoxim, Methylisobutylketoxim, 3-Methyl-2-butanonoxim, Diisobutylketoxim, 2-Pentanonoxim, 3-Pentanonoxim, 4-Methyl-2-pentanonoxim, 2-Heptanonoxim, 3-Heptanonoxim, Ethylhexylketoxim, Cyclohexanonoxim, Acetophenonoxim, Benzophenonoxim und Mischungen davon.

Vorzugsweise können vorgenannte Verbindungen mit verkappten, reaktiven Gruppen zusammen mit wenigstens einem Katalysator verwendet werden. Als Katalysatoren können alle bekannten Verbindungen eingesetzt werden, die Isocyanatreaktionen katalysieren können. Beispiele hierfür sind Titanate wie Tetrabutyltitanat und Tetrapropyltitanat, Zinncarboxylate wie Dibutylzinndilaulat (DBTL), Dibutylzinndiacetat, Zinnoctoat; Zinnoxide wie Dibutylzinnoxid, und Dioctylzinnoxid; Organoaluminumverbindungen wie Aluminumtrisacetylacetonat, Aluminumtrisethylacetoacetat; Chelatverbindungen wie Titantetraacetylacetonat; Aminverbindungen wie Triethylenediamin, Guanidin, Diphenylguanidin, 2,4,6-tris(dimethylaminomethyl)phenol, Morpholin, N-methylmorpholin, 2-Ethyl-4-methylimidazole, und 1,8-Diazabicyclo-(5,4,0)undecen-7 (DBU), 1,4-Diazabicyclo[2,2,2]octan, N,N-Dimethylpiperazin, 1,8-Diazabicyclo[5.4.0]undec-7-en, Dimorpholinodimethylether, Dimorpholinodiethylether (DMDEE) oder deren Mischungen. Das Vorhandensein eines der vorgenannten Katalysatoren führt vorzugsweise zu einer Reduzierung der zur Freisetzung der entsprechenden reaktiven Gruppe aus dem entsprechenden verkappten Analog notwendigen Temperatur.

Der Begriff "Prepolymer" bezeichnet vorzugsweise reaktive Oligomere, die vorzugsweise zur Herstellung von in der Oberschicht enthaltenen Bindemittel, vorzugsweise von Polyurethan-Polymeren, dienen. Prepolymere können beispielsweise mindestens zwei identische Gruppen aufweisen, vorzugsweise mindestens zwei freie Isocyanat-Gruppen und/oder mindestens zwei freie gegenüber Isocyanat-Gruppen reaktionsfähige Gruppen, beispielsweise Amino- und/oder Hydroxy-Gruppen, und/oder jeweils entsprechend verkappte Analoge davon.

Die wenigstens eine, zumindest bereichsweise noch nicht vollständig ausgehärtete Oberschicht kann beispielsweise durch Umsetzung wenigstens einer Verbindung mit zwei oder mehr Isocyanat-Gruppen mit wenigstens einer Verbindung, die zwei oder mehr gegenüber Isocyanat-Gruppen reaktionsfähige Gruppen, beispielsweise Hydroxy-Gruppen und/oder Aminogruppen, aufweist, hergestellt werden, wobei vorzugsweise entweder die wenigstens eine Verbindung mit zwei oder mehr Isocyanat-Gruppen oder die wenigstens eine Verbindung, die zwei oder mehr gegenüber Isocyanat-Gruppen reaktionsfähigen Gruppen aufweist, im Überschuss eingesetzt wird.

Geeignete Verbindungen mit zwei oder mehr Isocyanat-Gruppen sind bekannt und umfassen beispielsweise monomere Isocyanate mit zwei oder mehr Isocyanat-Gruppen, Isocyanat-Addukte, Isocyanatprepolymere mit zwei oder mehr Isocyanat-Gruppen oder Mischungen davon.

Monomere Isocyanate mit zwei oder mehr Isocyanat-Gruppen sind beispielsweise, aliphatische Isocyanate mit zwei oder mehr Isocyanat-Gruppen, cycloaliphatische Isocyanate mit zwei oder mehr Isocyanat-Gruppen, aromatische Isocyanate mit zwei oder mehr Isocyanat-Gruppen, Addukte davon, oder Mischungen davon, beispielsweise 1,6-Hexamethylendiisocyanat (HDI), Isophorondiisocyanat (IPDI), 2,4-Toluylendiisocyanat, 2,6-Toluylendiisocyanat, 2,4'-Diphenylmethandiisocyanat, 2,2'-Diphenylmethandiisocyanat, 4,4'-Diphenylmethandiisocyanat, Naphthylendiisocyanat (NDI), 4,4'-Diisocyanatodicyclohexylmethan (H12MDI), Xylylendiisocyanat (XDI), Tetramethylxylylendiisocyanat (TMXDI), Pentamethylendiisocyanat (PDI), 1,3-Phenylendiisocyanat, 1,4-Phenylendiisocyanat, Addukte davon oder Mischungen davon.

Isocyanat-Addukte sind kommerziell erhältlich und entstehen vorzugsweise durch Dimerisierung oder Trimerisierung eines der vorgenannten aliphatischen Diisocyanate, cycloaliphatischen Diisocyanate oder aromatischen Diisocyanate.

Beispielsweise kann das Trimer von 1,6-Hexamethylendiisocyanat (HDI), das auch als HDI-biuret bekannt ist, unter der Handelsbezeichnung Desmodur^{®} N kommerziell von der Covestro AG (Leverkusen, DE) bezogen werden.

Geeignete Verbindungen mit zwei oder mehr Isocyanat-Gruppen sind beispielsweise Isocyanatprepolymere, die zwei oder mehr Isocyanat-Gruppen aufweisen.

Isocyanatprepolymere sind kommerziell erhältlich und können vorzugsweise durch Umsetzung wenigstens eines der vorgenannten aliphatische Diisocyanate, cycloaliphatische Diisocyanate, aromatische Diisocyanate, Addukte davon oder Mischungen davon mit wenigstens einem Di- oder Polyol erhalten werden, wobei vorzugsweise das verwendete Diisocyanat im molaren Überschuss, bezogen auf die Anzahl der freien OH-Gruppen des verwendeten Di- oder Polyols, eingesetzt wird. Isocyanatprepolymere weisen somit in der Polymerkette vorzugsweise Urethangruppen sowie freie, reaktive Isocyanat-Gruppen auf, welche vorzugsweise zumindest teilweise verkappt sein können.

Isocyanatprepolymere können durch Erhöhung der Temperatur weiterhin teilweise zu Allophanaten und/oder Biureten umgesetzt werden.

Geeignete Verbindung mit zwei oder mehr Hydroxid-Gruppen sind mehrwertige Alkohole, die beispielsweise aus der Gruppe, die aus Alkandiolen, Alkantriolen, Alkantetraolen, Polyesterpolyolen, Polyetherpolyolen, und Mischungen davon besteht, ausgewählt werden.

Geeignete Polyesterpolyole sind vorzugsweise Umsetzungsprodukte von polyfunktionellen, vorzugsweise difunktionellen Alkoholen, gegebenenfalls zusammen mit geringen Mengen an trifunktionellen Alkoholen, und polyfunktionellen, vorzugsweise difunktionellen und/oder trifunktionellen Carbonsäuren. Anstatt freier Polycarbonsäuren können auch die entsprechenden Polycarbonsäureanhydride oder entsprechende Polycarbonsäureester mit Alkoholen mit vorzugsweise 1 bis 3 C-Atomen eingesetzt werden. Es können die zur Herstellung von Polyestern an sich bekannten Polyole und Carbonsäuren ausgewählt werden. Beispielsweise zur Herstellung derartiger Polyesterpolyole geeignete Diole sind Ethylenglykol, 1,2-Propandiol, 1,3-Propandiol, 1,2-Butandiol, 1,4-Butandiol, Pentandiol, die isomeren Hexandiole, Octandiol, 1,4-Hydroxymethyl-cyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol oder Polybutylenglykol. Es können auch aromatische Diole eingesetzt werden.

Die eingesetzten Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Glutarsäureanhydrid, Maleinsäure, Maleinsäureanhydrid, Fumarsäure oder Gemische aus zwei oder mehr davon geeignet. Als Tricarbonsäuren, die gegebenenfalls anteilig enthalten sein können, sind beispielsweise Zitronensäure oder Trimellithsäure geeignet. Alle genannten Säuren können einzeln oder als Gemische aus zwei oder mehr davon eingesetzt werden.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Weitere geeignete Polyesterpole sind Polycarbonat-Polyole. Polycarbonate können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder mit Phosgen, erhalten werden. Eine weitere Gruppe geeigneter Polyole sind Polylactone, beispielsweise Polyester auf der Basis von ε-Caprolacton. Auch Polyesterpolyole sind geeignet, die in der Molekülkette eine oder mehrere Urethangruppen enthalten.

Geeignete Polyetherpolyole sind beispielsweise Umsetzungsprodukte niedermolekularer polyfunktioneller Alkohole mit Alkylenoxiden. Die Alkylenoxide weisen vorzugsweise 2 bis 4 C-Atome auf. Geeignet sind beispielsweise die Umsetzungsprodukte von Ethylenoxid, Propylenoxid, Butylenoxid oder Gemische davon mit aliphatischen Diolen, wie Ethylenglykol, 1,2-Propandiol, 1,3-Propandiol, den isomeren Butandiolen, Hexandiolen, 2,2-Dimethyl-1,3-propandiol, 2-Methylpropandiol, 1,6-Hexandiol, 2,4,4-Trimethylhexandiol-1,6, 2,2,4-Trimethylhexandiol-1,6, 1,4-Cyclohexandimethanol, oder aromatischen Diolen, wie 4,4'-Dihydroxydiphenylpropan, Bisphenol A, Bisphenol F, Brenzkatechin, Resorcin, Hydrochinon oder Gemischen aus zwei oder mehr davon. Ferner können auch die Umsetzungsprodukte polyfunktioneller Alkohole, wie Glycerin, Trimethylolethan oder Trimethylolpropan, Pentaerythrit oder Zuckeralkohole mit den Alkylenoxiden geeignet sein.

Weitere geeignete Polyole entstehen durch Polymerisation von Tetrahydrofuran.

Weiterhin können vorgenannte Polyetherpolyole oder Polyesterpolyole, vorzugsweise Polyetherpolyole, Amino-funktionalisiert werden, wobei vorzugsweise eine oder mehrere Hydroxid-Gruppe durch eine oder mehrere Amino-Gruppe, primäre Amino-Gruppe und/oder sekundäre Amino-Gruppe ersetzt sind.

Beispielsweise sind Amino-funktionalisierte Polyetherpolyole, die auch als Aminoterminierte Polyether bezeichnet werden können, dem Fachmann bekannt und können beispielsweise unter der Bezeichnung JEFFAMINE ^{®} von der Firma Huntsman Corporation (The Woodlands, TX, USA) kommerziell bezogen werden.

Vorzugsweise kann die wenigstens eine, zumindest bereichsweise noch nicht vollständig ausgehärtete Oberschicht Isocyanatprepolymere, die vernetzt oder unvernetzt sein können, verkappte Isocyanatprepolymere, die vernetzt oder unvernetzt sein können, oder Mischungen davon umfassen oder daraus bestehen, wobei vorgenannte Isocyanatprepolymere oder verkappte Isocyanatprepolymere Spuren von monomeren Diisocyanaten und/oder Addukten davon enthalten können, vorzugsweise in einem Anteil von weniger als 5 Gew.-%, vorzugsweise von weniger als 1 Gew.-%, jeweils bezogen auf Gesamtgewicht des verwendeten Prepolymers.

Prepolymere mit freien, gegenüber Isocyanat-Gruppen reaktionsfähigen Gruppen, weiter bevorzugt Amino-Gruppen und/oder Hydroxy-Gruppen, können vorzugsweise durch Umsetzung wenigstens eines der vorgenannten aliphatische Diisocyanate, cycloaliphatische Diisocyanate, aromatische Diisocyanate, Addukte davon oder Mischungen davon mit wenigstens einem Diol, Polyol und/oder Amino-funktionalisierten Polyetherpolyol erhalten werden, wobei vorzugsweise die verwendeten Diole, Polyole und/oder Amino-funktionalisierten Polyetherpolyole in einem Molaren Überschuss, bezogen auf die Anzahl der freien Isocyanat-Gruppen des verwendeten Diisocyanat, eingesetzt werden.

Prepolymere mit freien, gegenüber Isocyanat-Gruppen reaktionsfähigen Gruppen, weisen somit in der Polymerkette vorzugsweise Urethangruppen sowie freie, reaktive Hydroxy-Gruppen und/oder Amino-Gruppen auf, welche vorzugsweise zumindest teilweise verkappt sein können, beispielsweise durch thermisch reversible Addition von Isocyanat.

Alternative kann die wenigstens eine, zumindest bereichsweise noch nicht vollständig ausgehärtete Oberschicht Prepolymere mit freien, gegenüber Isocyanat-Gruppen reaktionsfähigen Gruppen, die vernetzt oder unvernetzt sein können, Prepolymere mit verkappten, gegenüber Isocyanat-Gruppen reaktionsfähigen Gruppen, die vernetzt oder unvernetzt sein können, oder Mischungen davon umfassen oder daraus bestehen, wobei vorgenannte Prepolymere Spuren von eingesetzten Diolen, Polyolen und/oder Amino-funktionalisierten Polyetherpolyolen enthalten können, vorzugsweise in einem Anteil von weniger als 5 Gew.-%, vorzugsweise von weniger als 1 Gew.-%, jeweils bezogen auf Gesamtgewicht des verwendeten Prepolymers.

Weiter bevorzugt können vorgenannte Isocyanatprepolymere, verkappte Isocyanatprepolymere, Prepolymere mit freien, gegenüber Isocyanat-Gruppen reaktionsfähigen Gruppen, und/oder Prepolymere mit verkappten, gegenüber Isocyanat-Gruppen reaktionsfähigen Gruppen der wenigstens einen, zumindest bereichsweise noch nicht vollständig ausgehärteten Oberschicht durch Verwendung geeigneter Vernetzungsmittel, beispielsweise polyfunktionale Aziridine (PFA), vernetzt werden.

Weiterhin kann die wenigstens eine, zumindest bereichsweise noch nicht vollständig ausgehärtete Oberschicht wenigstens ein Co-Bindemittel aufweisen, das vorzugsweise aus der Gruppe, die aus Acrylharzen, Methacrylharzen, Vinylesterharzen und Mischungen davon besteht, ausgewählt wird und weiter bevorzugt keine freien, ethylenisch ungesättigten Gruppen aufweist.

Weiter bevorzugt weist die wenigstens eine, zumindest bereichsweise noch nicht vollständig ausgehärtete Oberschicht das wenigstens eine Co-Bindemittel in einem Anteil aus einem Bereich von höchstens 30 Gew.-%, weiter bevorzugt von höchstens 25 Gew.-%, vorzugsweise aus einem Bereich von 5 Gew.-% bis 20 Gew.%, jeweils bezogen auf das Gesamtgewicht der Schicht, auf.

Weiterhin kann die wenigstens eine, zumindest bereichsweise noch nicht vollständig ausgehärtete Oberschicht wenigstens ein Vernetzungsmittel enthalten, das vorzugsweise mindestens zwei freie Isocyanat-Gruppen und/oder mindestens zwei freie gegenüber Isocyanat-Gruppen reaktionsfähige Gruppen, beispielsweise Amino- und/oder Hydroxy-Gruppen, aufweist.

Geeignete Vernetzungsmittel sind bekannt und umfassen organische Verbindungen mit zwei oder mehr freien, reaktiven Gruppen, beispielsweise aliphatische oder alicyclische Verbindungen mit zwei oder mehr freien Isocyanat-Gruppen, aliphatische oder alicyclische Verbindung mit zwei oder mehr freien Hydroxid-Gruppen, aliphatische oder alicyclische Verbindung mit zwei oder mehr freien Amin-Gruppen, jeweils entsprechend verkappte Analoge davon oder Mischungen davon.

Weiter bevorzugt weist die wenigstens eine, zumindest bereichsweise noch nicht vollständig ausgehärtete Oberschicht das wenigstens eine Vernetzungsmittel in einem Anteil aus einem Bereich von höchstens 15 Gew.-%, weiter bevorzugt von höchstens 12 Gew.-%, vorzugsweise aus einem Bereich von 1 Gew.-% bis 10 Gew.%, jeweils bezogen auf das Gesamtgewicht der Schicht, auf.

Vorzugsweise enthält die wenigstens eine, zumindest bereichsweise noch nicht vollständig ausgehärtete Oberschicht wenigstens einen, vorzugsweise anorganischen, Füllstoff in einem Anteil von höchstens 15 Gew.-%, vorzugsweise aus einem Bereich von 0,1 Gew.-% bis 12 Gew.-%, weiter bevorzugt aus einem Bereich von 1 Gew.-% bis 10 Gew.-%, jeweils bezogen auf das Gesamtgewicht der Schicht.

Vorzugsweise enthält die wenigstens eine, zumindest bereichsweise noch nicht vollständig ausgehärtete Oberschicht wenigstens ein, vorzugsweise organisches, Additiv, beispielsweise wenigstens ein Benetzungsmittel, wenigstens ein Verlaufsmittel, wenigstens einen Entschäumer, wenigstens ein Thixotropiermittel oder eine Mischung davon, vorzugsweise in einem Anteil von höchstens 12 Gew.-%, vorzugsweise aus einem Bereich von 0,1 Gew.-% bis 10 Gew.-%, jeweils bezogen auf das Gesamtgewicht der Schicht.

Weiter bevorzugt weist die wenigstens eine, zumindest bereichsweise noch nicht vollständig ausgehärtete Oberschicht eine Dicke aus einem Bereich von 0,5 µm bis 15 µm, weiter bevorzugt aus einem Bereich von 1 µm bis 12 µm, auf.

Vorzugsweise umfasst die mindestens eine, zumindest bereichsweise noch nicht vollständig ausgehärtete Oberschicht keine Photoinitiatoren.

Photoinitiatoren sind chemische Verbindungen, die nach Absorption von Licht in einer Photolysereaktion zerfallen und so reaktive Spezies bilden, die eine Reaktion starten können, beispielsweise eine Polymerisation. Bei den reaktiven Spezies kann es sich um Radikale, Anionen oder um Kationen handeln.

Weiter bevorzugt umfasst die mindestens eine, zumindest bereichsweise noch nicht vollständig ausgehärtete Oberschicht keine Photoinitiatoren und keine Bindemittel mit freien, ethylenisch ungesättigten Gruppen.

Bei einer bevorzugten Ausführungsform ist zwischen der wenigstens einen, zumindest bereichsweise noch nicht vollständig ausgehärteten Oberschicht der Übertragungslage und dem wenigstens einen Dekorelement, das vorzugsweise in wenigstens einer der vorgenannten Dekorschichten angeordnet ist oder diese bildet, eine erste Haftvermittlerschicht angeordnet, die vorzugsweise eine Schichtdicke aus einem Bereich von 0,1 µm bis 10 µm, weiter bevorzugt aus einem Bereich von 1 µm bis 4 µm, aufweist.

Vorzugsweise umfasst die erste Haftvermittlerschicht wenigstens ein Acrylharz oder besteht daraus.

Vorzugsweise erhöht die erste Haftvermittlerschicht die Haftung zwischen der wenigstens einen, zumindest bereichsweise noch nicht vollständig ausgehärteten Oberschicht der Übertragungslage und dem wenigstens einen Dekorelement, das vorzugsweise in wenigstens einer der vorgenannten Dekorschichten angeordnet ist oder diese bildet.

Weiter bevorzugt weist die Übertragungslage der Transferfolie weiterhin wenigstens eine Lackschicht auf, die auf der der Trägerlage abgewandten Oberfläche der Übertragungslage angeordnet ist, vorzugsweise diese bildet.

Die wenigstens eine Lackschicht weist vorzugsweise eine Schichtdicke aus einem Bereich von 0,5 µm bis 10 µm, weiter bevorzugt aus einem Bereich von 1 µm bis 5 µm, auf.

Die wenigstens eine Lackschicht kann als Grundierungsschicht, beispielsweise auf Basis von Acrylnitril-Butadien-Styrol-Copolymeren (Kurzzeichen: ABS) oder Polyvinylchlorid (Kurzzeichen: PVC), und/oder als Kleberschicht ausgebildet sein.

Weiter bevorzugt umfasst die wenigstens eine Lackschicht wenigstens einen Klebstoff, der aus der Gruppe, die aus physikalisch härtenden Klebstoffen, chemisch härtenden Klebstoffen, Haftklebstoffen oder Mischung davon besteht, ausgewählt wird, oder besteht daraus.

Vorzugsweise vermittelt die wenigstens eine Lackschicht die Haftung zwischen dem wenigstens einen Dekorelement, das vorzugsweise in wenigstens einer der vorgenannten Dekorschichten angeordnet ist oder diese bildet, und einem, mit der Übertragungslage verbundenen Substrat. Vorzugsweise dient die wenigstens eine Lackschicht der Übertragungslage zum Fixieren der Übertragungslage auf einem Substrat.

Weiter bevorzugt kann in der wenigstens einen Lackschicht und/oder in der erste Haftvermittlerschicht der Übertragungslage jeweils unabhängig voneinander Farbstoffe gelöst und/oder Pigmente, beispielsweise Farbpigmente, Metallpigmente, Effektpigmente, fluoreszierende Pigmente, thermochrome Pimente oder Mischungen davon, angeordnet sein.

Die Transferfolie wird vorzugsweise durch sequenzielles, vorzugsweise vollflächiges oder partielles, Aufbringen der einzelnen Schichten der Übertragungslage auf die Transferlage durch im Stand der Technik bekannte Verfahren, beispielsweise durch Druckverfahren wie Tiefdruck, Siebdruck, Flexodruck, Inkjetdruck, oder Offsetdruck, und/oder durch Gießverfahren wie Schlitzgießen, hergestellt.

Weiterhin ist das, vorzugsweise vollflächige oder partielle, Aufbringen aufgedampfter und/oder aufgedruckter Metallschichten und/oder Metalloxidschichten als Dekorelement oder Dekorschicht möglich. Aufgedampfte Metall- und/oder Metalloxidschichten können beispielsweise durch im Stand der Technik bekannte Verfahren, beispielsweise physikalische Gasphasenabscheidung (PVD) oder chemische Gasphasenabscheidung (CVD), aufgebracht werden.

Weiter bevorzugt wird wenigstens eine Dekorschicht nach Abformung einer optisch aktiven Oberflächenstruktur in eine Replikationsschicht vorzugsweise jeweils bereichsweise oder vollflächig auf die Replikationsschicht aufgedampft.

Möglich ist auch das vollflächige Aufbringen gefolgt von einem bereichsweisen Entfernen der wenigstens einen Dekorschicht mittels bekannter Verfahren wie Waschverfahren oder Lift-Off-Lacke oder Ätzverfahren oder Maskenbelichtungsverfahren unter Zuhilfenahme einer Photoresistschicht.

Vorzugsweise wird auf die Transferlage, die wenigstens eine Trägerschicht aus einem Polyester, einem Polyolefin oder einer Kombination davon, insbesondere aus PET, umfasst, zunächst die wenigstens eine, zumindest bereichsweise noch nicht vollständig ausgehärtete Oberschicht der Übertragungslage durch wenigstens eines der vorgenannten Druck- und/oder Gießverfahren angeordnet bzw. aufgebracht.

Beispielsweise kann die wenigstens eine, zumindest bereichsweise noch nicht vollständig ausgehärtete Oberschicht, als Mischung auf die Trägerlage aufgebracht werden, wobei die Mischung vorzugsweise:
a) wenigstens ein Bindemittel, das vorzugsweise aus der Gruppe, die aus Polyurethanharzen, Polyurethandispersionen, Phenolharzen, Epoxidharzen, Polyharnstoffen, Melaminharzen, Aminoplasten, Polyesterharzen, Alkydharzen, Polyamidharzen und Mischungen davon, weiter bevorzugt Polyurethanharzen, Polyurethandispersionen, Phenolharzen, Polyharnstoffen, Melaminharzen, Aminoplasten, Polyesterharzen, Alkydharzen, Polyamidharzen und Mischungen davon, besteht, ausgewählt wird,
b) optional, wenigstens ein Co-Bindemittel, das vorzugsweise aus der Gruppe, die aus Acrylharzen, Methacrylharzen, Vinylesterharzen und Mischungen davon besteht, ausgewählt wird und weiter bevorzugt keine freien, ethylenisch ungesättigten Gruppen aufweist,
c) optional, wenigstens eines der vorgenannten Vernetzungsmittel,
d) optional, wenigstens eines der vorgenannten, vorzugsweise anorganischen, Füllstoffe,
e) optional, wenigstens eines der vorgenannten, vorzugsweise organischen, Additive, und
f) optional, wenigstens ein Lösungsmittel, vorzugsweise Wasser und/oder wenigstens ein organisches Lösungsmittel,
umfasst oder daraus besteht.

Vorzugsweise umfasst oder besteht die zur Herstellung der wenigstens einen, zumindest bereichsweise noch nicht vollständig ausgehärteten Oberschicht verwendete Mischung aus:
20 Gew.-% bis 90 Gew.-% wenigstens eines der oben genannten Bindemittel,
5 Gew.-% bis 25 Gew.-% wenigstens eines der oben genannten Co-Bindemittel,
0 Gew.-% bis 10 Gew.-% wenigstens eines der oben genannten Vernetzungsmittel,
0 Gew.-% bis 10 Gew.-% wenigstens eines der oben genannten Füllstoffe,
0 Gew.-% bis 10 Gew.-% wenigstens eines der oben genannten Additive, und
10 Gew.-% bis 50 Gew.-% wenigstens eines Lösungsmittels, jeweils bezogen auf das Gesamtgewicht der Mischung.

Beispielsweise kann die wenigstens eine, zumindest bereichsweise noch nicht vollständig ausgehärtete Oberschicht, wie vorstehend beschrieben, als Mischung wenigstens einer, der vorgenannten Verbindungen mit zwei oder mehr Isocyanat-Gruppen und wenigstens einer, der vorgenannten Verbindungen, die zwei oder mehr gegenüber Isocyanat-Gruppen reaktionsfähige Gruppen aufweist, auf die Trägerlage aufgebracht werden, wobei vorzugsweise entweder die wenigstens eine Verbindung mit zwei oder mehr Isocyanat-Gruppen oder die wenigstens eine Verbindung, die zwei oder mehr gegenüber Isocyanat-Gruppen reaktionsfähigen Gruppen aufweist, im molaren Überschuss eingesetzt wird.

Vorzugsweise erfolgt das Umsetzen der wenigstens einen Verbindung mit zwei oder mehr Isocyanat-Gruppen und der wenigstens einen Verbindung, die zwei oder mehr gegenüber Isocyanat-Gruppen reaktionsfähigen Gruppen aufweist, vor, während oder nach dem Aufbringen der vorgenannten Mischung.

Weiter bevorzugt erfolgt das Aufbringen der wenigstens einen, zumindest bereichsweise noch nicht vollständig ausgehärteten Oberschicht durch Aufbringen wenigstens einer fließfähigen, vorzugsweise Lösungsmittel-haltigen, Isocyanat-haltigen Zusammensetzung, die vorgenannte Isocyanatprepolymere, die vernetzt oder unvernetzt sein können, vorgenannte verkappte Isocyanatprepolymere, die vernetzt oder unvernetzt sein können, oder Mischungen davon umfasst oder daraus besteht.

Eine fließfähige, vorzugsweise Lösungsmittel-haltige, Isocyanat-haltige Zusammensetzung weist vorzugsweise eine dynamische Viskosität bei 25°C aus einem Bereich von 2 mPa·s bis 1500 mPa·s, vorzugsweise von 10 mPa·s bis 1000 mPa·s, weiter bevorzugt von 10 mPa·s bis 500 mPa·s, auf, vorzugsweise bestimmt gemäß des in DIN EN ISO 3219:1994-10 ("Kunststoffe - Polymere/Harze in flüssigem, emulgiertem oder dispergiertem Zustand - Bestimmung der Viskosität mit einem Rotationsviskosimeter bei definiertem Geschwindigkeitsgefälle" Ausgabedatum 1994-10) beschriebenen Verfahrens, beispielsweise unter Verwendung eines HAAKE Viscotester^{®} VT550 (Thermo Fischer Scientific Inc., Waltham, MA, USA), weiter bevorzugt unter Verwendung einer Zylinder-Messeinrichtung NV und eines Messbechers NV.

Vorzugsweise umfasst eine fließfähige, vorzugsweise Lösungsmittel-haltige, Isocyanat-haltige Zusammensetzung, wenigstens ein organisches Lösungsmittel, beispielsweise Ethylacetat, 2-Butanon, Aceton, Toluol, Xylole oder Mischungen davon.

Weiter bevorzugt ist eine Isocyanat-haltigen Zusammensetzung, die vorgenannte Isocyanatprepolymere umfasst, wasserfrei. Vorgenannte verkappte Isocyanatprepolymere können dagegen als wässrige Dispersion vorliegen.

Alternativ kann das Aufbringen der wenigstens einen, zumindest bereichsweise noch nicht vollständig ausgehärteten Oberschicht durch Aufbringen wenigstens einer fließfähigen, vorzugsweise Lösungsmittel-haltigen, gegenüber Isocyanat-Gruppen reaktionsfähigen Zusammensetzung, die vorgenannte Prepolymere mit freien, gegenüber Isocyanat-Gruppen reaktionsfähigen Gruppen, die vernetzt oder unvernetzt sein können, vorgenannte Prepolymere mit verkappten, gegenüber Isocyanat-Gruppen reaktionsfähigen Gruppen, die vernetzt oder unvernetzt sein können, oder Mischungen davon umfassen oder daraus bestehen, erfolgen.

Eine fließfähige, vorzugsweise Lösungsmittel-haltige, gegenüber Isocyanat-Gruppen reaktionsfähige Zusammensetzung weist vorzugsweise eine dynamische Viskosität bei 25°C aus einem Bereich von 2 mPa·s bis 1500 mPa·s, vorzugsweise von 10 mPa·s bis 1000 mPa·s, weiter bevorzugt von 10 mPa·s bis 500 mPa·s, auf, vorzugsweise bestimmt gemäß des in DIN EN ISO 3219:1994-10 beschriebenen Verfahrens, beispielsweise unter Verwendung eines HAAKE Viscotester^{®} VT550, weiter bevorzugt unter Verwendung einer Zylinder-Messeinrichtung NV und eines Messbechers NV.

Vorzugsweise umfasst eine fließfähige, vorzugsweise Lösungsmittel-haltige, gegenüber Isocyanat-Gruppen reaktionsfähige Zusammensetzung, Wasser und/oder wenigstens ein organisches Lösungsmittel, beispielsweise Ethylacetat, 2-Butanon, Aceton, Toluol, Xylole oder Mischungen davon.

Beispielsweise kann eine fließfähige, vorzugsweise Lösungsmittel-haltige, gegenüber Isocyanat-Gruppen reaktionsfähige Zusammensetzung als wässrige Dispersion vorliegen.

Alternativ kann die wenigstens eine fließfähige, Isocyanat-haltige Zusammensetzung und/oder die wenigstens eine fließfähige, gegenüber Isocyanat-Gruppen reaktionsfähige Zusammensetzung als thixotrop standfeste Paste ausgeführt sein, die vorzugsweise durch mechanische Einwirkung wie Rühren, Schütteln, Umspachteln oder Rakeln von einer festen oder pastösen Konsistenz in eine fließfähige Konsistenz überführt werden kann und nach dem Auftragen vorzugsweise wieder eine feste oder pastöse Konsistenz aufweisen.

Auf die wenigstens eine, zumindest bereichsweise noch nicht vollständig ausgehärtete Oberschicht der Übertragungslage wird anschließend zumindest das wenigstens eine Dekorelement auf der der Trägerlage abgewandten Seite der wenigstens einen, zumindest bereichsweise noch nicht vollständig ausgehärteten Oberschicht angeordnet.

Beispielsweise kann das Anordnen des wenigstens einen Dekorelements auf der der Trägerlage abgewandten Seite der wenigstens einen, zumindest bereichsweise noch nicht vollständig ausgehärteten Oberschicht durch Auflegen wenigstens eines geeigneten Dekorelements auf die wenigstens eine, zumindest bereichsweise noch nicht vollständig ausgehärtete Oberschicht der Übertragungslage erfolgen.

Vorzugsweise wird das wenigstens eine Dekorelement in wenigstens einer Dekorschicht angeordnet, beispielsweise gelöst und/oder dispergiert, die jeweils unabhängig voneinander einen UV-vernetzten Lack oder eine thermoplastisch verformbare Schicht umfasst und die jeweils unabhängig voneinander unpigmentiert oder pigmentiert ist. Das wenigstens eine Dekorelement kann weiterhin wenigstens eine Dekorschicht bilden, beispielsweise eine, vorzugsweise vollflächig oder partiell, aufgedampfte und/oder aufgedruckte Metallschicht und/oder Metalloxidschicht.

Weiter bevorzugt wird zwischen der wenigstens einen, zumindest bereichsweise noch nicht vollständig ausgehärteten Oberschicht der Übertragungslage und dem wenigstens einen Dekorelement oder der wenigstens einen Dekorlage eine erste Haftvermittlerschicht mittels wenigstens eines der vorgenannten Druck- und/oder Gießverfahren angeordnet.

Dadurch wird vorzugweise die Haftung zwischen der wenigstens einen, zumindest bereichsweise noch nicht vollständig ausgehärteten Oberschicht der Übertragungslage und der wenigstens einen Dekorschicht, die aus der Gruppe, die aus transparenten und/oder farbigen Lackschichten, insbesondere umfassend ein oder mehrere Farbstoffe und/oder Pigmente, Replizierschichten mit abgeformter optisch aktiver Oberflächenstruktur, Reflexionsschichten, insbesondere opake Reflexionsschichten, transparente Reflexionsschichten, metallische Reflexionsschichten oder dielektrische Reflexionsschichten, optisch variable Schichten, optisch aktive Schichten, Interferenz-Mehrschichtsysteme, Volumenhologrammschichten, Flüssigkristallschichten, insbesondere cholesterische Flüssigkristallschichten, elektrisch leitfähige Schichten, Antennenschichten, Elektrodenschichten, magnetische Schichten, Magnetspeicherschichten, Barriereschichten und Kombinationen davon besteht, ausgewählt wird, verbessert.

Weiter bevorzugt wird abschließend auf die, der Trägerlage abgewandten Oberfläche der Übertragungslage wenigstens eine Lackschicht mittels wenigstens eines der vorgenannten Druck- und/oder Gießverfahren angeordnet.

Das erfindungsgemäße Verfahrens zur Herstellung eines folienbeschichteten Artikels unter Verwendung einer Transferfolie, wobei die Transferfolie eine Trägerlage und eine auf der Trägerlage angeordnete, wenigstens ein Dekorelement umfassende Übertragungslage enthält, umfasst folgende Schritte:
a) Verbinden eines Substrats mit wenigstens einer, der Trägerlage abgewandten Oberfläche der Übertragungslage, und
b) Entfernen der Trägerlage von der auf dem Substrat gebundenen Übertragungslage,
c) Aufbringen wenigstens einer Schutzschicht auf eine, dem Substrat gegenüberliegenden Oberfläche der Übertragungslage,
wobei die Übertragungslage, angrenzend an die Trägerlage, wenigstens eine Oberschicht aufweist, die zumindest bereichsweise noch nicht vollständig ausgehärtet ist, und die zumindest teilweise die dem Substrat gegenüberliegenden Oberfläche der Übertragungslage bildet, wobei das wenigstens eine Dekorelement auf der der Trägerlage abgewandten Seite der wenigstens einen Oberschicht der Übertragungslage angeordnet ist, und wobei das Aufbringen der wenigstens einen Schutzschicht auf die Oberfläche der Übertragungslage in Schritt c) durch zumindest teilweises Überfluten und/oder Übergießen der wenigstens einen Oberschicht der Übertragungslage mit wenigstens einer Zusammensetzung aus Polyurethan-Vorläufern (2K-PUR Systemen) und nachfolgendem Härten, vorzugsweise bei einer Temperatur aus einem Bereich von 25°C bis 180°C, erfolgt, wobei die wenigstens eine Schutzschicht auf der wenigstens einen Oberschicht der Übertragungslage nach dem Aushärten mit einer Haftkraft, bestimmt gemäß der in DIN EN ISO 4624: 2016-08 beschriebenen Methode, aus einem Bereich von 2,5 MPa bis 10 MPa haftet.

Das erfindungsgemäße Verfahren ermöglicht das Aufbringen wenigstens einer Schutzschicht auf unterschiedliche Substrate, die vorzugsweise aus der Gruppe, die aus Papier, Kunststoff, Holz, Composite, Glas, Metall und Kombinationen davon besteht, ausgewählt wird.

Dabei wird insbesondere eine Transferfolie verwendet, die einerseits auf wenigstens eine Oberfläche eines Substrats eine, wenigstens ein Dekorelement enthaltende Übertragungslage überträgt und andererseits die Haftung wenigstens einer Schutzschicht auf dem Substrat verbessert.

Wie vorstehend ausgeführt, kann die wenigstens ein Dekorelement enthaltende Übertragungslage je nach Ausgestaltung des wenigstens einen Dekorelements, die physikalischen Eigenschaften, vorzugsweise die haptischen, optischen, elektrischen und/oder mechanischen Eigenschaften, und/oder die chemischen Eigenschaften der Oberfläche des beschichteten Substrats beeinflussen.

Weiterhin verbessert die wenigstens ein Dekorelement enthaltende Übertragungslage durch spezifische Ausgestaltung der zwischen der Trägerlage und der Übertragungslage angeordneten wenigstens einen, zumindest bereichsweise noch nicht vollständig ausgehärteten Oberschicht die Haftung einer nachträglich aufgebachten Schutzschicht.

Zunächst wird in Schritt a) des erfindungsgemäßen Verfahrens ein Substrat mit wenigstens einer, der Trägerlage abgewandten Oberfläche der Übertragungslage verbunden, vorzugsweise unter Erhalt eines zumindest teilweise beschichteten Gegenstandes.

Vorzugsweise erfolgt das Verbinden eines Substrats mit wenigstens einer, der Trägerlage abgewandten Oberfläche der Übertragungslage der Transferfolie in Schritt a), durch
a1) Kleben, Heißprägen, Laminieren oder Kombinationen davon wenigstens einer, der Trägerlage abgewandten Oberfläche der Übertragungslage auf wenigstens eine Oberfläche eines Substrates, das aus der Gruppe, die aus Papier, Kunststoff, Holz, Composite, Glas, Metall und Kombinationen davon, ausgewählt wird, oder durch
a2) zumindest teilweises Bedecken wenigstens einer, der Trägerlage abgewandten Oberfläche der Übertragungslage der Transferfolie mit wenigstens einer Kunststoffspritzmasse, wobei die Transferfolie in wenigstens einer Spritzgussform angeordnet wird und die wenigstens eine Spritzgussform mit wenigstens einer Kunststoffspritzmasse gefüllt wird, wobei die Kunststoffspritzmasse einen thermoplastischen Kunststoff, einen duroplastischen Kunststoff oder eine Mischung davon umfasst.

Vorzugsweise wird in Schritt a) des erfindungsgemäßen Verfahrens ein Substrat mit wenigstens einer, der Trägerlage abgewandten Oberfläche der Übertragungslage zumindest partiell, vorzugsweise vollflächig, verbunden.

Geeignete Kunststoffe und/oder Kunststoffspritzmassen werden vorzugsweise aus der Gruppe, die aus Acrylnitril-Butadien-Styrol-Copolymere (Kurzzeichen: ABS), Polycarbonat (Kurzzeichen: PC), eine Mischung aus ABS und PC, Polyoxymethylen (Kurzzeichen: POM), Polymethylmethacrylat (Kurzzeichen: PMMA), Styrol-Acrylnitril-Copolymere (Kurzzeichen: SAN), Acrylnitril-Styrol-Acrylat-Copolymere (Kurzzeichen: ASA), Polypropylen (Kurzzeichen: PP), Thermoplastische Elastomere auf Olefinbasis (Kurzzeichen: TPO), Polyamide (Kurzzeichen: PA) und Mischungen aus mindestens zwei Materialien dieser Gruppe, die miteinander kompatibel sind, besteht, ausgewählt.

Das Laminieren wenigstens einer, der Trägerlage abgewandten Oberfläche der Übertragungslage auf wenigstens eine Oberfläche eines Substrates, kann beispielsweise in Gegenwart eines Klebers erfolgen oder durch Erreichen der Glasübergangstemperatur der zur Verbindung verwendeten Schicht der Transferfolie und unter entsprechendem Druck.

Weiter bevorzugt erfolgt das Verbinden des Substrats mit wenigstens einer, der Trägerlage abgewandten Oberfläche der Übertragungslage durch die wenigstens eine Lackschicht, die auf der der Trägerlage abgewandten Oberfläche der Übertragungslage angeordnet ist. Weiter bevorzugt umfasst die wenigstens eine Lackschicht wenigstens einen Klebstoff, der aus der Gruppe, die aus physikalisch härtenden Klebstoffen, chemisch härtenden Klebstoffen, Haftklebstoffen oder Mischung davon besteht, ausgewählt wird, oder besteht daraus.

In Schritt b) des erfindungsgemäßen Verfahrens wird die Trägerlage von der auf dem Substrat gebundenen Übertragungslage, vorzugsweise rückstandsfrei, entfernt.

Nach dem Entfernen der Trägerlage bildet die wenigstens eine, zumindest bereichsweise noch nicht vollständig ausgehärtete Oberschicht zumindest teilweise die Außenschicht des zumindest teilweise beschichteten Gegenstandes.

Weiter bevorzugt bildet die wenigstens eine, zumindest bereichsweise noch nicht vollständig ausgehärtete Oberschicht eine, dem Substrat gegenüberliegende Oberfläche der Übertragungslage.

In Schritt c) des erfindungsgemäßen Verfahrens wird wenigstens eine Schutzschicht auf eine, dem Substrat gegenüberliegenden Oberfläche der Übertragungslage, die durch die wenigstens eine, zumindest bereichsweise noch nicht vollständig ausgehärtete Oberschicht der Übertragungslage zumindest teilweise gebildet wird, aufgebracht.

Das Aufbringen der wenigstens einen Schutzschicht auf die wenigstens eine Oberschicht der Übertragungslage in Schritt c) erfolgt durch zumindest teilweises Überfluten und/oder Übergießen der wenigstens einen Oberschicht der Übertragungslage mit wenigstens einer Lösungsmittel-haltigen, vorzugsweise fließfähigen, Polyurethan-haltigen Zusammensetzung und nachfolgendem Härten erfolgt.

Vorzugsweise wird unter dem Begriff "fließfähige Polyurethan-haltigen Zusammensetzung" eine Polyurethan-haltigen Zusammensetzung verstanden, die vorzugsweise bei einer Temperatur von 25°C eine dynamische Viskosität aus einem Bereich von 2 mPa·s bis 1500 mPa·s, vorzugsweise von 10 mPa·s bis 1000 mPa·s, weiter bevorzugt von 10 mPa s bis 500 mPa·s, aufweist, vorzugsweise bestimmt gemäß des in DIN EN ISO 3219:1994-10 beschriebenen Verfahrens, beispielsweise unter Verwendung eines HAAKE Viscotester^{®} VT550, weiter bevorzugt unter Verwendung einer Zylinder-Messeinrichtung NV und eines Messbechers NV.

Wie vorstehend beschrieben weist die wenigstens eine Zusammensetzung aus Polyurethan-Vorläufern (2K-PUR Systemen) vorzugsweise ebenfalls freie, reaktive Gruppen, vorzugsweise freie Isocyanat-Gruppen oder freie gegenüber Isocyanat-Gruppen reaktionsfähigen Gruppen, und/oder jeweils entsprechende verkappte, reaktive Gruppen, die bei einer Temperatur aus einem Bereich von 30°C bis 180°C die entsprechende reaktive Gruppe wieder freisetzen, auf.

Bei der Aushärtung, vorzugsweise vollständigen Aushärtung, der wenigstens einen, zumindest bereichsweise noch nicht vollständig ausgehärteten Oberschicht der Übertragungslage und/oder der darauf aufgebrachten Schutzschicht können daher beispielsweise freie Isocyanat-Gruppen, die in der Oberschicht der Übertragungslage enthalten sind, mit freien, gegenüber Isocyanat-Gruppen reaktionsfähigen Gruppen der zur Herstellung der wenigstens einen Schutzschicht verwendeten Zusammensetzung aus Polyurethan-Vorläufern (2K-PUR Systemen) reagieren.

Dadurch wird jeweils vorzugsweise die Haftung der wenigstens einen Schutzschicht auf der wenigstens einen Oberschicht der Übertragungslage nach dem Aushärten in Schritt c) des erfindungsgemäßen Verfahrens signifikant verbessert.

Die wenigstens eine Zusammensetzung aus Polyurethan-Vorläufern (2K-PUR Systemen) weist vorzugsweise ebenfalls freie, reaktive Gruppen, vorzugsweise Isocyanat-Gruppen oder gegenüber Isocyanat-Gruppen reaktionsfähigen Gruppen und/oder jeweils entsprechende verkappte, reaktive Gruppen, die bei einer Temperatur aus einem Bereich von 30°C bis 180°C die entsprechende reaktive Gruppe wieder freisetzen, auf.

Die wenigstens eine Zusammensetzung aus Polyurethan-Vorläufern (2K-PUR Systemen) kann, insbesondere als Mischung wenigstens einer, der vorgenannten Verbindungen mit zwei oder mehr Isocyanat-Gruppen und wenigstens einer, der vorgenannten Verbindungen, die zwei oder mehr gegenüber Isocyanat-Gruppen reaktionsfähige Gruppen aufweist, auf die wenigstens eine Oberschicht der Übertragungslage aufgebracht werden, wobei vorzugsweise entweder die wenigstens eine Verbindung mit zwei oder mehr Isocyanat-Gruppen oder die wenigstens eine Verbindung, die zwei oder mehr gegenüber Isocyanat-Gruppen reaktionsfähigen Gruppen aufweist, im molaren Überschuss eingesetzt wird.

Beispielsweise weisen Polyurethan-haltige Dispersionen, Polyurethan-haltige Harze und/oder Polyurethan-Lösungen, vorgenannte Prepolymere mit freien, gegenüber Isocyanat-Gruppen reaktionsfähigen Gruppen, die vernetzt oder unvernetzt sein können, vorgenannte Prepolymere mit verkappten, gegenüber Isocyanat-Gruppen reaktionsfähigen Gruppen, die vernetzt oder unvernetzt sein können, oder Mischungen davon und/oder vorgenannte Isocyanatprepolymere, die vernetzt oder unvernetzt sein können, vorgenannte verkappte Isocyanatprepolymere, die vernetzt oder unvernetzt sein können, oder Mischungen davon auf.

Weiter bevorzugt weist die zur Herstellung der wenigstens einen Schutzschicht verwendete wenigstens eine Zusammensetzung aus Polyurethan-Vorläufern (2K-PUR Systemen) wenigstens ein organisches Lösungsmittel, beispielsweise Ethylacetat, 2-Butanon, Aceton, Toluol, Xylole oder Mischungen davon, auf.

Weiter bevorzugt ist eine zur Herstellung der wenigstens einen Schutzschicht verwendete wenigstens eine Zusammensetzung aus Polyurethan-Vorläufern (2K-PUR Systemen), die vorgenannte Isocyanatprepolymere umfasst, wasserfrei. Vorgenannte verkappte Isocyanatprepolymere können dagegen als wässrige Dispersion vorliegen.

Weiter bevorzugt weist eine zur Herstellung der wenigstens einen Schutzschicht verwendete wenigstens eine Zusammensetzung aus Polyurethan-Vorläufern (2K-PUR Systemen), die vorgenannte Prepolymere mit freien, gegenüber Isocyanat-Gruppen reaktionsfähigen Gruppen, die vernetzt oder unvernetzt sein können, vorgenannte Prepolymere mit verkappten, gegenüber Isocyanat-Gruppen reaktionsfähigen Gruppen, die vernetzt oder unvernetzt sein können, oder Mischungen davon umfasst, Wasser und/oder wenigstens ein organisches Lösungsmittel, beispielsweise Ethylacetat, 2-Butanon, Aceton, Toluol, Xylole oder Mischungen davon, auf.

Nach dem, vorzugsweise vollständigen, Entfernen der Trägerlage in Schritt b) des erfindungsgemäßen Verfahrens erfolgt, vorzugsweise unmittelbar, in Schritt c) das Aufbringen wenigstens einer Schutzschicht auf die wenigstens eine, zumindest bereichsweise noch nicht vollständig ausgehärtete Oberschicht durch zumindest teilweises Überfluten und/oder Übergießen der wenigstens einen Oberschicht mit wenigstens einer Zusammensetzung aus Polyurethan-Vorläufern (2K-PUR Systemen) und nachfolgendem Härten, vorzugsweise bei eine Temperatur aus einem Bereich von 25°C bis 180°C.

Bei Verwendung von 2K-PUR Systemen werden die Polyurethan-Vorläufer, beispielsweise Polyol-haltige und Isocyanat-haltige Komponente, vorzugsweise getrennt gelagert und erst bei der Anforderung im Mischkopf zusammengebracht. Durch die bei der Reaktion der Polyurethan-Vorläufer gebildete Reaktionswärme kommt es vorzugsweise zu einer Erwärmung auf eine Temperatur von 60°C bis 180°C, vorzugsweise von 80°C bis 120°C.

Auch die Oberflächen bzw. Wandungen der verwendeten Formwerkzeuge können vorzugsweise eine Temperatur aus einem Bereich von 40°C bis 160°C, vorzugsweise aus einem Bereich von 80°C bis 120°C, aufweisen.

Vorzugsweise erfolgt das Aufbringen der wenigstens einen Schutzschicht auf die wenigstens eine Oberschicht in Schritt c) durch offenes Fluten, Fluten in einem Gießwerkzeug oder Fluten in einem 2K-Werkzeug.

Beim offenen Fluten wird vorzugsweise die Oberflächenspannung der zur Herstellung der wenigstens einen Schutzschicht verwendeten wenigstens einen Zusammensetzung aus Polyurethan-Vorläufern (2K-PUR Systemen) im Außenkantenbereich des zu überflutenden Bauteils genutzt, wobei die Schutzschicht ohne eine werkzeugkonturgebende Form auf das Bauteil geflutet wird. Durch entsprechender Lagerung, vorzugsweise für einen Zeitraum von 2 s bis 60 s, des überfluteten Bauteils bei einer Temperatur aus einem Bereich von 20°C bis 100°C erfolgt vorzugsweise das Aushärten.

Beim Fluten in einem Gießwerkzeug findet der ganze Vorgang in einem abgeschlossenen Werkzeug statt, welches den zum flutenden Bereich als Hohlraum vorgibt.

Das Einfüllen der zur Herstellung der wenigstens einen Schutzschicht verwendeten wenigstens einen Zusammensetzung aus Polyurethan-Vorläufern (2K-PUR Systemen) erfolgt vorzugsweise über einen Mischkopf, vorzugsweise bei einem Druck von weniger als 10 bar.

Eine erste Aushärtungsphase kann über eine Beaufschlagung des Formwerkzeugs mit Wärme, beispielsweise bei einer Temperatur von 60°C bis 160°C, vorzugsweise für eine Zeitspanne von 60 s bis 600 s, eingeleitet werden.

Nach dem Entfernen des Gießwerkzeugs wird das Bauteil vorzugsweise noch ca. 24 h vor der weiteren Verwendung für eine Restaushärtung gelagert.

Beim Fluten in einem 2K-Werkzeug erfolgt das Fluten in Kombination mit einem Spritzgießprozess, wobei vorzugsweise in einem ersten Bereich des 2K-Werkzeugs das zumindest teilweise Bedecken wenigstens einer, der Trägerlage abgewandten Oberfläche der Übertragungslage der Transferfolie mit wenigstens einer Kunststoffspritzmasse die einen thermoplastischen Kunststoff, einen duroplastischen Kunststoff oder eine Mischung davon umfasst, erfolgt.

In einem zweiten Bereich des 2K-Werkzeugs erfolgt das zumindest teilweise Überfluten und/oder Übergießen der wenigstens einen Oberschicht mit wenigstens einer Zusammensetzung aus Polyurethan-Vorläufern (2K-PUR Systemen) durch einen PUR-Mischkopf.

Vorzugsweise weist das 2K-Werkzeug einen Drehmechanismus oder eine Verschiebeplatte auf, der in die jeweilige Position gebracht wird.

Bei der Aushärtung, vorzugsweise vollständigen Aushärtung, der wenigstens einen, zumindest bereichsweise noch nicht vollständig ausgehärteten Oberschicht der Übertragungslage und der darauf aufgebrachten Schutzschicht können beispielsweise freie Isocyanat-Gruppen, die in der Oberschicht der Übertragungslage enthalten sind, mit freien, gegenüber Isocyanat-Gruppen reaktionsfähigen Gruppen der zur Herstellung der wenigstens einen Schutzschicht verwendeten Zusammensetzung aus Polyurethan-Vorläufern (2K-PUR Systemen) reagieren.

Vorzugsweise wird eine Schicht als "ausgehärtet" im Sinne der vorliegenden Erfindung bezeichnet, wenn die zu einer Vernetzung fähigen Polymerbestandteile, vorzugsweise Bindemittel, beispielsweise freie Isocyanat-Gruppen und/oder freie, gegenüber Isocyanat-Gruppen reaktionsfähigen Gruppen, der jeweiligen Schicht zu mehr als 95 % eine Vernetzung aufweisen.

Vorzugsweise kann vor und/oder während und/oder nach dem Aufbringen der wenigstens einen Schutzschicht in Schritt c) die wenigstens eine Schutzschicht modifiziert und/oder strukturiert werden, vorzugsweise durch Einlegen/Auflegen von Partikeln auf die wenigstens eine Oberschicht der Übertragungslage nach Schritt b) und/oder durch Verwendung von Werkzeugstrukturen während des Aufbringens in Schritt c) und/oder durch nachträgliches Lasern, Überdrucken, mechanisches Bearbeiten und/oder Überprägen der wenigstens einen Schutzschicht.

Vorzugsweise kann eine Modifikation der Schutzschicht und der wenigstens einen Oberschicht der Übertragungslage im Register zu in der Übertragungslage bereits vorhandenen Designmerkmalen und/oder Motiven stattfinden, beispielsweise eine Oberflächenstruktur im Register zu einer Holzmaserung oder eine taktil wahrnehmbare Struktur im Register zu einem Motiv.

Eine durch das erfindungsgemäße Verfahren hergestellte wenigstens eine Schutzschicht weist vorzugsweise transparente oder reduziert lichtdurchlässige Eigenschaften auf.

Unter "transparent" wird vorzugsweise eine Transmission im sichtbaren Wellenlängenbereich von mehr als 50%, vorzugweise von mehr als 80%, und weiter bevorzugt von mehr als 90%, des entsprechenden Teils des elektromagnetischen Spektrums verstanden.

Ein erfindungsgemäßer folienbeschichteter Artikel hergestellt durch ein Verfahren nach einem der Ansprüche 1 bis 14, umfasst ein Substrat und wenigstens eine, an wenigstens einer Oberfläche des Substrates zumindest teilweise angeordnete Übertragungslage, die wenigstens ein Dekorelement enthält, wobei die, von dem Substrat abgewandten Seite der Übertragungslage durch wenigstens eine, vorzugsweise ausgehärtete, Oberschicht gebildet ist, auf die wenigstens eine Schutzschicht, die wenigstens einen Kunststoff auf Basis eines Polyurethans umfasst, mit einer Dicke aus einem Bereich von 0,2 mm bis 5 mm angeordnet ist, wobei die wenigstens eine Schutzschicht auf der wenigstens einen, vorzugsweise ausgehärteten, Oberschicht mit einer Haftkraft, bestimmt gemäß der in DIN EN ISO 4624: 2016-08 beschriebenen Methode, vorzugsweise mit einem Haftzugprüfgerät PosiTest^{®} AT Serie der Fa. DeFelsko Corporation (Ogdensburg, NY, USA) unter Verwendung eines 20 mm-Prüfstempels, aus einem Bereich von 2,5 MPa bis 10 MPa, insbesondere von 2,5 MPa bis 5 MPa, haftet.

Vorzugsweise wird das Substrat aus der Gruppe, die aus Papier, Kunststoff, Holz, Composite, insbesondere gewebte oder nicht gewebte Faserverbundstoffe oder auch Laminate, Glas, Metall und Kombinationen davon besteht, ausgewählt.

Im Folgenden wird die Erfindung anhand von mehreren Ausführungsbeispielen unter Zuhilfenahme der beiliegenden Zeichnungen beispielhaft erläutert. Dabei zeigen:
Fig. 1 zeigt eine schematische Darstellung einer Transferfolie
Fig. 2 zeigt eine schematische Darstellung einer Transferfolie
Fig. 3 zeigt eine schematische Darstellung einer Transferfolie
Fig. 4 zeigt eine schematische Darstellung einer Transferfolie
Fig. 5 zeigt eine schematische Darstellung eines folienbeschichteten Gegenstandes.
Fig. 6 zeigt eine schematische Darstellung eines folienbeschichteten Gegenstandes.
Fig. 7 zeigt eine schematische Darstellung eines folienbeschichteten Gegenstandes.
Fig. 8 zeigt eine schematische Darstellung eines folienbeschichteten Gegenstandes.

Die in der vorliegenden Patentanmeldung verwendete Abkürzung "Gew.-%" bezeichnet die Gehaltsangabe "Gewichtsprozent".

Die Transferfolie 1 umfasst eine Trägerlage 10, 10' und eine auf der Trägerlage 10, 10' angeordnete Übertragungslage 13, 13', 13", die wenigstens ein Dekorelement enthält, wobei die Übertragungslage 13, 13', 13", angrenzend an die Trägerlage 10, 10', wenigstens eine Oberschicht 15 aufweist, die zumindest bereichsweise noch nicht vollständig ausgehärtet ist, wobei das wenigstens eine Dekorelement auf der der Trägerlage 10, 10' abgewandten Seite der wenigstens einen Oberschicht 15 angeordnet ist, und wobei die Trägerlage 10, 10' wenigstens eine Trägerschicht 11 aus einem Polyester, einem Polyolefin oder einer Kombination davon, insbesondere aus PET, mit vorzugsweise einer Schichtdicke von 10 µm bis 75 µm, weiter bevorzugt von 20 µm bis 40 µm, ist.

Vorzugsweise weist die wenigstens eine, zumindest bereichsweise noch nicht vollständig ausgehärtete Oberschicht 15 eine Dicke von 0,5 µm bis 15 µm, bevorzugt von 1 µm bis 12 µm, auf.

Vorzugsweise ist das wenigstens eine Dekorelement in wenigstens einer Dekorschicht 14 angeordnet, die jeweils unabhängig voneinander einen UV-vernetzten Lack oder eine thermoplastisch verformbare Schicht umfasst und die jeweils unabhängig voneinander unpigmentiert oder pigmentiert oder eingefärbt ist.

Weiter bevorzugt beträgt die Schichtdicke der wenigstens einen Dekorschicht 14 jeweils unabhängig voneinander von 0,1 µm bis 15 µm, weiter bevorzugt von 4 bis 8 µm.

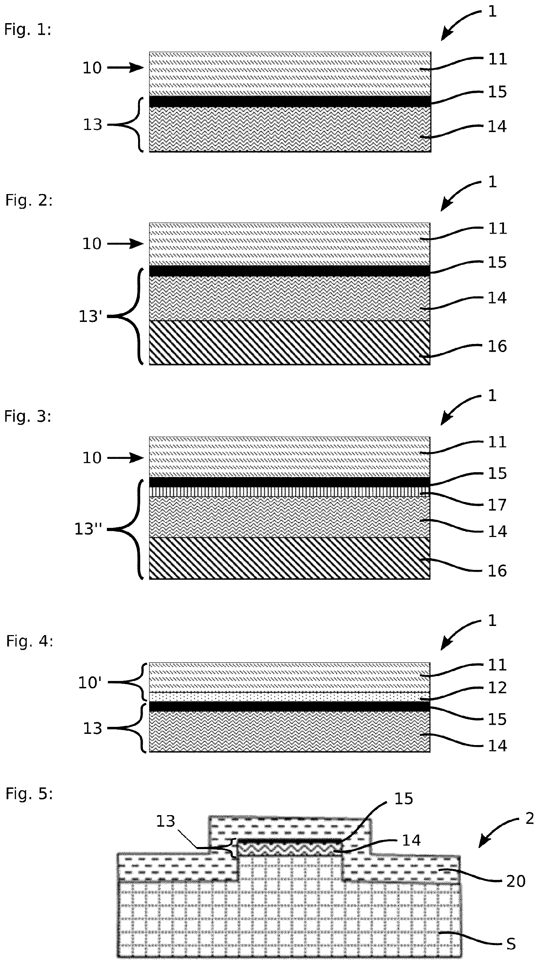

Bei der in Fig. 1 dargestellten bevorzugten Ausführungsform der Transferfolie 1 ist das wenigstens eine Dekorelement in wenigstens einer Dekorschicht 14 angeordnet. Die wenigstens eine Dekorschicht 14 ist auf der der Trägerlage 10, 10' abgewandten Seite der wenigstens einen Oberschicht 15 der Übertragungslage 13 angeordnet.

Die wenigstes eine Dekorschicht 14 kann eine oder mehrere Schichten umfassen, welche vollflächig oder partiell in der einen Übertragungslage 13, 13', 13" angeordnet sind und welche vorzugsweise ausgewählt sind aus: transparente und/oder farbige Lackschicht, insbesondere umfassend ein oder mehrere Farbstoffe und/oder Pigmente, Replizierschicht mit abgeformter optisch aktiver Oberflächenstruktur, Reflexionsschicht, insbesondere opake Reflexionsschicht, transparente Reflexionsschicht, metallische Reflexionsschicht oder dielektrische Reflexionsschicht, optisch variable Schicht, Haftvermittlerschicht, Kleberschicht, Heißkleberschicht, Heißsiegelkleberschicht, Kaltkleberschicht, Interferenz-Mehrschichtsystem, Volumenhologrammschicht, Flüssigkristallschicht, insbesondere cholesterische Flüssigkristallschicht, elektrisch leitfähige Schicht, Antennenschicht, Elektrodenschicht, magnetische Schicht, Magnetspeicherschicht, Barriereschicht, und/oder Kombinationen aus zweier oder mehrerer der vorstehenden Schichten.

Beispielsweise kann auf der der Trägerlage 10, 10' abgewandten Oberfläche der Übertragungslage 13, 13', 13" wenigstens eine Lackschicht 16 mit einer Schichtdicke von vorzugsweise 0,5 µm bis 10 µm, weiter bevorzugt von 1 µm bis 5 µm, angeordnet sein.

Bei der in Fig. 2 dargestellten bevorzugten Ausführungsform der Transferfolie 1 ist auf der der Trägerlage 10 abgewandten Oberfläche der Übertragungslage 13' wenigstens eine Lackschicht 16 angeordnet.

Die wenigstens eine Dekorschicht 14 ist bei der in Fig. 2 dargestellten bevorzugten Ausführungsform zwischen der wenigstens einen Oberschicht 15 der Übertragungslage 13' und der wenigstens einen Lackschicht 16 angeordnet.

Vorzugsweise umfasst die wenigstens eine Lackschicht 16 wenigstens einen Klebstoff, der aus der Gruppe, die aus physikalisch härtenden Klebstoffen, chemisch härtenden Klebstoffen, Haftklebstoffen oder Mischung davon besteht, ausgewählt wird, oder besteht daraus.

Vorzugsweise kann zwischen der wenigstens einen, zumindest bereichsweise noch nicht vollständig ausgehärteten Oberschicht 15 und der wenigstens einen Dekorschicht 14 eine erste Haftvermittlerschicht 17 angeordnet sein, die vorzugsweise eine Schichtdicke von 0,1 µm bis 10 µm, weiter bevorzugt von 1 µm bis 4 µm, aufweist.

Vorzugsweise umfasst die erste Haftvermittlerschicht 17 wenigstens ein Acrylharz oder besteht daraus.

Bei der in Fig. 3 dargestellten bevorzugten Ausführungsform der Transferfolie 1 ist zwischen der wenigstens einen, zumindest bereichsweise noch nicht vollständig ausgehärteten Oberschicht 15 und der wenigstens einen Dekorschicht 14 eine erste Haftvermittlerschicht 17 angeordnet, wobei auf der der Trägerlage 10 abgewandten Oberfläche der Übertragungslage 13" weiterhin wenigstens eine Lackschicht 16 angeordnet sein kann.

Vorzugsweise kann die Transferfolie 1 wenigstens eine Ablöseschicht 12, vorzugsweise mit einer Schichtdicke von 0,1 nm bis 50 nm, weiter bevorzugt von 1 nm bis 20 nm, aufweisen, die zwischen der Trägerschicht 11 und der wenigstens einen Oberschicht (15) angeordnet ist.

Weiter bevorzugt umfasst die wenigstens eine Ablöseschicht 12 wenigstens ein Wachs oder besteht daraus.

Bei der in Fig. 4 dargestellten bevorzugten Ausführungsform der Transferfolie 1 wird die Trägerlage 10` durch wenigstens eine Trägerschicht 11 und wenigstens eine darauf angeordnete Ablöseschicht 12 gebildet. Die auf der Trägerlage 10' angeordnete Übertragungslage 13 wird vorzugsweise durch wenigstens eine, auf der Ablöseschicht 12 angeordneten Oberschicht 15 und wenigstens einer, darauf angeordneten Dekorschicht 14 gebildet.

Vorzugsweise ist die Trägerlage 10, 10' auf der wenigstens einen Oberschicht 15 mit einer Haftkraft, vorzugsweise bestimmt mit einem Messgerät Z006 der Fa. Zwick, aus einem Bereich von 2 cN bis 50 cN, vorzugsweise aus einem Bereich von 5 cN bis 35 cN, angeordnet.

Bei der Messung der Haftkraft der Trägerlage 10, 10' auf der wenigstens einen Oberschicht 15 mit einem Messgerät Z006 der Fa. Zwick, wird vorzugsweise in einem ersten Schritt eine beschichteter Prüfkörper durch haftfestes Applizieren einer Transferfolie in einer Breite von 3,5 cm auf eine Kunststoffplatte mittels Heißprägen hergestellt.

Während der Messung wird vorzugsweise in einem zweiten Schritt die Trägerlage über eine Länge von 100 mm senkrecht von dem Prüfkörper abgezogen. Dabei werden vorzugsweise die benötigten Kräfte im Bereich der Länge von 10 mm bis 90 mm der aufgebrachten Trägerfolie mit einem Messgerät Z006 der Zwick GmbH & Co. KG (Ulm, DE) gemessen.

Zur Messung der Haftkraft wird das vorgenannte Messgerät Z006 vorzugsweise mit einer waagerechten Substrataufnahme kombiniert. Die Substrataufnahme weist einen beweglichen Schlitten auf, auf dem ein Testsubstrat befestigt ist. Auf dem Testsubstrat ist die Transferfolie 1, insbesondere mittels Heißprägen appliziert. Die Trägerlage 10, 10' der applizierten Transferfolie 1 wird vorzugsweise aus der Waagerechten mittels Umlenkrolle in die Senkrechte umgelenkt und an dem vorgenannten Messgerät befestigt. Während der Messung und der senkrecht möglichst gleichmäßig wirkenden Kraft des Messgeräts auf die Trägerlage 10, 10' wird der Schlitten mit dem Testsubstrat entsprechend so bewegt bzw. gezogen, dass ein Abziehen der Trägerlage 10, 10' von der auf das Testsubstrat applizierten Übertragungslage 13, 13', 13"möglich ist.

Ein erfindungsgemäßer folienbeschichteter Artikel 2, hergestellt durch ein Verfahren nach einem der Ansprüche 1 bis 14 unter Verwendung einer Transferfolie 1, umfasst ein Substrat S und wenigstens eine, an wenigstens einer Oberfläche des Substrates S zumindest teilweise angeordnete Übertragungslage 13, 13', 13", die wenigstens ein Dekorelement enthält, wobei die, von dem Substrat S abgewandten Seite der Übertragungslage 13, 13', 13" durch wenigstens eine, vorzugsweise ausgehärtete, Oberschicht 15 gebildet ist, auf die wenigstens eine Schutzschicht 20, die wenigstens einen Kunststoff auf Basis eines Polyurethans umfasst, mit einer Dicke aus einem Bereich von 0,2 mm bis 5 mm angeordnet ist, wobei die wenigstens eine Schutzschicht 20 auf der wenigstens einen Oberschicht 15 mit einer Haftkraft, bestimmt gemäß der in DIN EN ISO 4624: 2016-08 beschriebenen Methode, vorzugsweise mit einem Haftzugprüfgerät PosiTest^{®} AT Serie der Fa. DeFelsko Corporation (Ogdensburg, NY, USA) unter Verwendung eines 20 mm-Prüfstempels, aus einem Bereich von 2,5 MPa bis 10 MPa, insbesondere von 2,5 MPa bis 5 MPa, haftet.

Eine Bestimmung der Haftkraft kann entsprechend den in DIN EN ISO 4624: 2016-08 ("Beschichtungsstoffe - Abreißversuch zur Bestimmung der Haftfestigkeit", Ausgabedatum: 2016-08) und DIN EN ISO 16276-1: 2007-08 ("Korrosionsschutz von Stahlbauten durch Beschichtungssysteme - Beurteilung der Adhäsion/Kohäsion (Haftfestigkeit) einer Beschichtung und Kriterien für deren Annahme - Teil 1: Abreißversuch", Ausgabedatum: 2007-08) beschriebenen Verfahren erfolgen, beispielsweis durch Verwendung eines PosiTest^{®} AT Haftfestigkeitsprüfers der Fa. DeFelsko Corporation (Ogdensburg, NY, USA), der mittels hydraulischen Drucks vorzugsweise die Kraft misst, die benötigt wird, um einen spezifizierten Testbereich einer Beschichtung vom Untergrund zu lösen.

Vorzugsweise wird das Substrat S aus der Gruppe, die aus Papier, Kunststoff, Holz, Composite, Glas, Metall und Kombinationen davon besteht, ausgewählt.

Bei der in Fig. 5 dargestellten bevorzugten Ausführungsform eines erfindungsgemäßen folienbeschichteten Artikels 2, weist die Übertragungslage 13 eine ausgehärtete Oberschicht 15 und wenigstens eine Dekorschicht 14 auf, die an wenigstens einer Oberfläche des Substrates S teilweise angeordnet ist, wobei die, von dem Substrat S abgewandten Seite der Übertragungslage 13 durch wenigstens eine, vorzugsweise ausgehärtete, Oberschicht 15 gebildet ist, auf die wenigstens eine Schutzschicht 20, die wenigstens einen Kunststoff auf Basis eines Polyurethans umfasst, mit einer Dicke aus einem Bereich von 0,2 mm bis 5 mm angeordnet ist.

Die Schutzschicht 20 ist weiterhin ebenfalls auf dem Substrat S angeordnet.

Die Übertragungslage 13 wurde durch partielle Heißprägung einer in Fig. 1 oder Fig. 4 dargestellten Transferfolie 1 mit einem kunststoffhaltigen Substrat S verbunden, wobei nach dem Verbinden die jeweilige Trägerlage 10 bzw. 10' von der auf dem Substrat S angeordnete Übertragungslage 13 entfernt wurde.

Das Aufbringen der wenigstens einen Schutzschicht 20 auf die wenigstens eine Oberschicht 15 der Übertragungslage 13 erfolgt anschließend durch Überfluten und/oder Übergießen der wenigstens einen Oberschicht 15 der Übertragungslage 13 mit wenigstens einer Zusammensetzung aus Polyurethan-Vorläufern (2K-PUR Systemen) und nachfolgendem Härten, vorzugsweise bei einer Temperatur aus einem Bereich von 60°C bis 160°C.

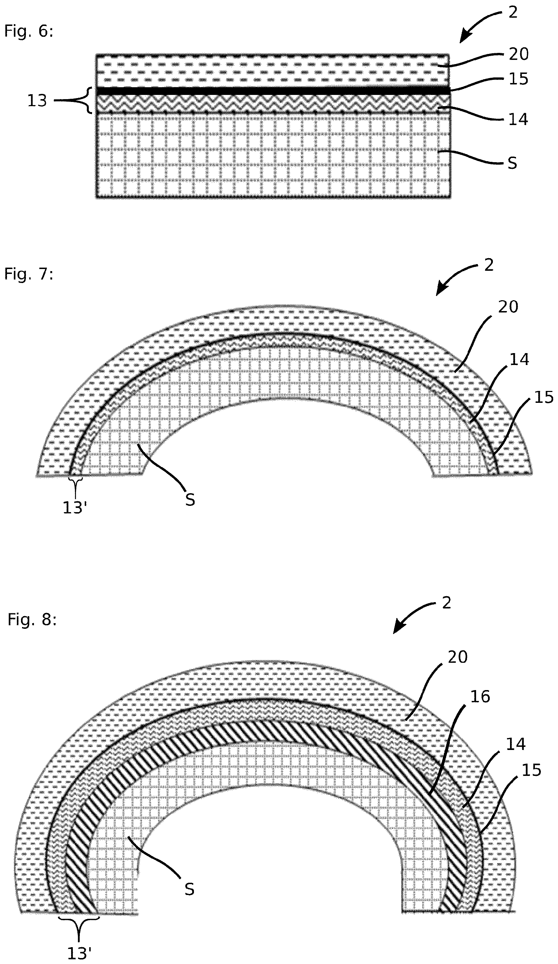

Bei der in Fig. 6 dargestellten bevorzugten Ausführungsform eines erfindungsgemäßen folienbeschichteten Artikels 2, weist die Übertragungslage 13 eine ausgehärtete Oberschicht 15 und wenigstens eine Dekorschicht 14 auf, die an wenigstens einer Oberfläche des Substrates S vollflächig angeordnet ist, wobei die, von dem Substrat S abgewandten Seite der Übertragungslage 13 durch wenigstens eine, vorzugsweise ausgehärtete, Oberschicht 15 gebildet ist, auf die wenigstens eine Schutzschicht 20, die wenigstens einen Kunststoff auf Basis eines Polyurethans umfasst, mit einer Dicke aus einem Bereich von 0,2 mm bis 5 mm angeordnet ist.

Die Schutzschicht 20 ist nur auf Übertragungslage 13 angeordnet.

Die Übertragungslage 13 wurde durch vollflächige Heißprägung einer in Fig. 1 oder Fig. 4 dargestellten Transferfolie 1 mit einem kunststoffhaltigen Substrat S verbunden, wobei nach dem Verbinden die jeweilige Trägerlage 10 bzw. 10' von der auf dem Substrat S angeordnete Übertragungslage 13 entfernt wurde.

Das Aufbringen der wenigstens einen Schutzschicht 20 auf die wenigstens eine Oberschicht 15 der Übertragungslage 13 erfolgt anschließend durch Überfluten und/oder Übergießen der wenigstens einen Oberschicht 15 der Übertragungslage 13 mit wenigstens einer Zusammensetzung aus Polyurethan-Vorläufern (2K-PUR Systemen) und nachfolgendem Härten, vorzugsweise bei einer Temperatur aus einem Bereich von 60°C bis 160°C.

Bei der in Fig. 7 dargestellten bevorzugten Ausführungsform eines erfindungsgemäßen folienbeschichteten Artikels 2, weist die Übertragungslage 13 wenigstens eine ausgehärtete Oberschicht 15 und wenigstens eine Dekorschicht 14 auf, die an wenigstens einer Oberfläche des Substrates S vollflächig angeordnet ist, wobei die, von dem Substrat S abgewandten Seite der Übertragungslage 13 durch wenigstens eine, vorzugsweise ausgehärtete, Oberschicht 15 gebildet ist, auf die wenigstens eine Schutzschicht 20, die wenigstens einen Kunststoff auf Basis eines Polyurethans umfasst, mit einer Dicke aus einem Bereich von 0,2 mm bis 5 mm angeordnet ist.

Die Oberschicht 15 weist eine Dicke von 0,5 µm bis 15 µm, bevorzugt von 1 µm bis 12 µm, auf.

Das Verbinden des Substrats S mit wenigstens einer, der Trägerlage abgewandten Oberfläche der Übertragungslage 13 der Transferfolie erfolgte durch vollflächiges Bedecken der durch Dekorschicht 14 gebildeten Oberfläche der Übertragungslage 13 der in Fig. 1 oder Fig. 4 dargestellten Transferfolie 1 mit wenigstens einer Kunststoffspritzmasse, die einen thermoplastischen Kunststoff, einen duroplastischen Kunststoff oder eine Mischung davon umfasst.

Nach dem Verbinden wurde die jeweilige Trägerlage 10 bzw. 10' von der auf dem Substrat S angeordnete Übertragungslage 13 entfernt.

Das Aufbringen der wenigstens einen Schutzschicht 20 auf die wenigstens eine Oberschicht 15 der Übertragungslage 13 erfolgt anschließend durch Überfluten und/oder Übergießen der wenigstens einen Oberschicht 15 der Übertragungslage 13 mit wenigstens einer Zusammensetzung aus Polyurethan-Vorläufern (2K-PUR Systemen) und nachfolgendem Härten, vorzugsweise bei einer Temperatur aus einem Bereich von 60°C bis 160°C.

Bei der in Fig. 8 dargestellten bevorzugten Ausführungsform eines erfindungsgemäßen folienbeschichteter Artikel 2, weist die Übertragungslage 13' wenigstens eine ausgehärtete Oberschicht 15, wenigstens eine Dekorschicht 14 und wenigstens eine Lackschicht 16, die an wenigstens einer Oberfläche des Substrates S vollflächig angeordnet ist, auf, wobei die, von dem Substrat S abgewandten Seite der Übertragungslage 13 durch wenigstens eine, vorzugsweise ausgehärtete, Oberschicht 15 gebildet ist, auf die wenigstens eine Schutzschicht 20, die wenigstens einen Kunststoff auf Basis eines Polyurethans umfasst, mit einer Dicke aus einem Bereich von 0,2 mm bis 5 mm angeordnet ist.

Die Oberschicht 15 weist eine Dicke von 0,5 µm bis 15 µm, bevorzugt von 1 µm bis 12 µm, auf.

Das Verbinden des Substrats S mit wenigstens einer, der Trägerlage abgewandten Oberfläche der Übertragungslage 13' der Transferfolie 1 erfolgte durch vollflächiges Laminieren der durch Lackschicht 16 gebildeten Oberfläche der Übertragungslage 13' der in Fig. 2 dargestellten Transferfolie 1 auf wenigstens eine Oberfläche eines Substrates S.

Das Aufbringen der wenigstens einen Schutzschicht 20 auf die wenigstens eine Oberschicht 15 der Übertragungslage 13' erfolgt anschließend durch Überfluten und/oder Übergießen der wenigstens einen Oberschicht 15 der Übertragungslage 13' mit wenigstens einer Zusammensetzung aus Polyurethan-Vorläufern (2K-PUR Systemen) und nachfolgendem Härten, vorzugsweise bei einer Temperatur aus einem Bereich von 60°C bis 160°C.

Die in Fig. 8 dargestellte bevorzugte Ausführungsform eines erfindungsgemäßen folienbeschichteten Artikels 2 weist eine Hinterschneidung auf.

Dekor-Hinterschneidungen können mit dem erfindungsgemäßen Verfahren auf einfache Weise mit wenigstens einem Dekor und nachfolgend wenigstens einer Schutzschicht auf einfache Weise beschichtet werden.

Zur Herstellung von Oberschicht 15 der in den Fig. 1 bis Fig. 4. dargestellten Transferfolien 1 kann beispielsweise folgende Harzzusammensetzung verwendet werden:20 Gew.-% bis 90 Gew.-% wenigstens eines Bindemittel, beispielsweise Polyurethan,
5 Gew.-% bis 25 Gew.-% wenigstens eines Co-Bindemittel, beispielsweise Acrylat-Copolymer,
1 Gew.-% bis 10 Gew.-% wenigstens eines der vorgenannten Vernetzer,
0 Gew.-% bis 10 Gew.-% wenigstens eines Füllstoffs, beispielsweise Aerosil,
0 Gew.-% bis 10 Gew.-% wenigstens eines der vorgenannten Additive,
10 Gew.-% bis 50 Gew.-% wenigstens eines Lösungsmittels, beispielsweise Wasser, jeweils bezogen auf das Gesamtgewicht der Harzzusammensetzung.

### Bezugszeichenliste

- 1: Transferfolie
- 2: folienbeschichteter Artikel
- S: Substrat

- 10, 10': Trägerlage
- 11: Trägerschicht
- 12: Ablöseschicht
- 13, 13', 13": Übertragungslage
- 14: Dekorschicht
- 15: Oberschicht
- 16: Lackschicht
- 17: erste Haftvermittlerschicht

- 20: Schutzschicht

## Patentansprüche

1. Verfahren zur Herstellung eines folienbeschichteten Artikels (2) unter Verwendung einer Transferfolie (1), wobei die Transferfolie (1) eine Trägerlage (10, 10') und eine auf der Trägerlage (10, 10') angeordnete Übertragungslage (13, 13', 13"), die wenigstens ein Dekorelement (4) enthält, umfasst, wobei das Verfahren folgende Schritte umfasst:
a) Verbinden eines Substrats (S) mit wenigstens einer, der Trägerlage (10, 10') abgewandten Oberfläche der Übertragungslage (13, 13', 13"), und
b) Entfernen der Trägerlage (10, 10') von der auf dem Substrat (S) gebundenen Übertragungslage (13, 13', 13"),
c) Aufbringen wenigstens einer Schutzschicht (20) auf eine, dem Substrat (S) gegenüberliegenden Oberfläche der Übertragungslage (13, 13', 13"),
wobei die Übertragungslage (13, 13', 13"), angrenzend an die Trägerlage (10, 10'), wenigstens eine Oberschicht (15) aufweist, die zumindest bereichsweise noch nicht vollständig ausgehärtet ist, und die zumindest teilweise die dem Substrat (S) gegenüberliegenden Oberfläche der Übertragungslage (13, 13', 13") bildet, wobei das wenigstens eine Dekorelement auf der der Trägerlage (10, 10') abgewandten Seite der wenigstens einen Oberschicht (15) der Übertragungslage (13, 13', 13") angeordnet ist, und **dadurch gekennzeichnet, dass**
das Aufbringen der wenigstens einen Schutzschicht (20) auf die Oberfläche der Übertragungslage (13, 13', 13") in Schritt c) durch zumindest teilweises Überfluten und/oder Übergießen der wenigstens einen Oberschicht (15) mit wenigstens einer Zusammensetzung aus Polyurethan-Vorläufern (2K-PUR Systemen) und nachfolgendem Härten, vorzugsweise bei einer Temperatur aus einem Bereich von 25°C bis 180°C, erfolgt,
wobei die wenigstens eine Schutzschicht (20) auf der wenigstens einen Oberschicht (15) der Übertragungslage (13, 13', 13") nach dem Aushärten mit einer Haftkraft, bestimmt gemäß der in DIN EN ISO 4624: 2016-08 beschriebenen Methode, aus einem Bereich von 2,5 MPa bis 10 MPa haftet.

2. Verfahren nach Anspruch 1,
**dadurch gekennzeichnet,**
**dass** die Trägerlage (10, 10') wenigstens eine Trägerschicht (11) aus einem Polyester, einem Polyolefin oder einer Kombination davon, insbesondere aus PET, ist.

3. Verfahren nach Anspruch 2,
**dadurch gekennzeichnet,**
**dass** die wenigstens eine, zumindest bereichsweise noch nicht vollständig ausgehärtete Oberschicht (15) eine Dicke von 0,5 µm bis 15 µm aufweist.

4. Verfahren nach einem der Ansprüche 2 oder 3,
**dadurch gekennzeichnet,**
**dass** die wenigstens eine, zumindest bereichsweise noch nicht vollständig ausgehärtete Oberschicht (15), wenigstens ein Bindemittel, das aus der Gruppe, die aus Polyurethanharzen, Polyurethandispersionen, Acrylharzen, Methacrylharzen, Phenolharzen, Epoxidharzen, Polyharnstoffen, Melaminharzen, Aminoplasten, Polyesterharzen, Alkydharzen, Polyamidharzen, Vinylesterharzen und Mischungen davon besteht, ausgewählt wird, umfasst oder daraus besteht.

5. Verfahren nach einem der Ansprüche 2 bis 4,
**dadurch gekennzeichnet,**
**dass** zwischen der wenigstens einen, zumindest bereichsweise noch nicht vollständig ausgehärteten Oberschicht (15) und dem wenigstens einen Dekorelement eine erste Haftvermittlerschicht (17) angeordnet ist, die vorzugsweise wenigstens ein Acrylharz umfasst oder daraus besteht und weiter bevorzugt eine Schichtdicke von 0,1 µm bis 10 µm aufweist.

6. Verfahren nach einem der Ansprüche 2 bis 5,
**dadurch gekennzeichnet,**
**dass** das wenigstens eine Dekorelement in wenigstens einer Dekorschicht (14) angeordnet ist, die einen UV-vernetzten Lack oder eine thermoplastisch verformbare Schicht umfasst und die unpigmentiert oder pigmentiert oder eingefärbt ist.

7. Verfahren nach einem der Ansprüche 2 bis 6,
**dadurch gekennzeichnet,**
**dass** die wenigstens eine, wenigstens ein Dekorelement enthaltende Dekorschicht (14) aus der Gruppe, die aus transparenten und/oder farbigen Lackschichten, insbesondere umfassend ein oder mehrere Farbstoffe und/oder Pigmente, Replizierschichten mit abgeformter optisch aktiver Oberflächenstruktur, Reflexionsschichten, insbesondere opaken Reflexionsschichten, transparenten Reflexionsschichten, metallischen Reflexionsschichten oder dielektrischen Reflexionsschichten, optisch variablen Schichten, optisch aktiven Schichten, Interferenz-Mehrschichtsystemen, Volumenhologrammschichten, Flüssigkristallschichten, insbesondere cholesterischen Flüssigkristallschichten, elektrisch leitfähigen Schichten, Antennenschichten, Elektrodenschichten, magnetische Schichten, Magnetspeicherschichten, Barriereschichten und Kombinationen davon besteht, ausgewählt wird.

8. Verfahren nach einem der Ansprüche 2 bis 7,
**dadurch gekennzeichnet,**
**dass** die Transferfolie (1) wenigstens eine Ablöseschicht (12) mit einer Schichtdicke von 0,1 nm bis 50 nm, aufweist, die zwischen der Trägerschicht (11) und der wenigstens einen Oberschicht (15) angeordnet ist und vorzugsweise wenigstens ein Wachs umfasst oder daraus besteht.

9. Verfahren nach einem der Ansprüche 2 bis 8,
**dadurch gekennzeichnet,**
**dass** die Transferfolie (1) wenigstens eine Lackschicht (16) mit einer Schichtdicke von 0,5 µm bis 10 µm aufweist, die auf der der Trägerlage (10, 10') abgewandten Oberfläche der Übertragungslage (13, 13', 13") angeordnet ist, wobei die wenigstens eine Lackschicht (16) vorzugsweise wenigstens einen Klebstoff, der aus der Gruppe, die aus physikalisch härtenden Klebstoffen, chemisch härtenden Klebstoffen, Haftklebstoffen oder Mischung davon besteht, ausgewählt wird, umfasst oder daraus besteht.

10. Verfahren nach einem der Ansprüche 2 bis 9,
**dadurch gekennzeichnet,**
**dass** die Trägerlage (10, 10') auf der wenigstens einen Oberschicht (15) mit einer Haftkraft aus einem Bereich von 2 cN bis 50 cN, vorzugsweise aus einem Bereich von 5 cN bis 35 cN, angeordnet ist.

11. Verfahren nach einem der Ansprüche 1 bis 10,
**dadurch gekennzeichnet,**
**dass** das Aufbringen der wenigstens einen Schutzschicht (20) auf die wenigstens eine Oberschicht (15) in Schritt c) durch offenes Fluten, Fluten in einem Gießwerkzeug oder Fluten in einem 2K-Werkzeug erfolgt.

12. Verfahren nach einem der Ansprüche 1 bis 11,
**dadurch gekennzeichnet,**
**dass** vor und/oder während und/oder nach dem Aufbringen der wenigstens einen Schutzschicht (20) in Schritt c) die wenigstens eine Schutzschicht (20) modifiziert und/oder strukturiert wird, vorzugsweise durch Einlegen/Auflegen von Partikeln auf die wenigstens eine Oberschicht (15) nach Schritt b) und/oder durch Verwendung von Werkzeugstrukturen während des Aufbringens in Schritt c) und/oder durch nachträgliches Lasern, Überdrucken und/oder Überprägen der wenigstens einen Schutzschicht (20).

13. Verfahren nach einem der Ansprüche 1 bis 12,
**dadurch gekennzeichnet,**
**dass** in Schritt a) das Verbinden eines Substrats (S) mit wenigstens einer der Trägerlage (10, 10') abgewandten Oberfläche der Übertragungslage (13, 13', 13") der Transferfolie (1) durch Kleben, Heißprägen, Laminieren oder Kombinationen davon auf wenigstens eine Oberfläche eines Substrates (S), das aus der Gruppe, die aus Papier, Kunststoff, Holz, Composite, Glas, Metall und Kombinationen davon, ausgewählt wird, erfolgt.

14. Verfahren nach einem der Ansprüche 1 bis 13,
**dadurch gekennzeichnet,**
**dass** in Schritt a) beim Verbinden eines Substrats (S) mit wenigstens einer der Trägerlage (10, 10') abgewandten Oberfläche der Übertragungslage (13, 13', 13") der Transferfolie (1) die abgewandte Oberfläche der Übertragungslage (13, 13', 13") mit wenigstens einer Kunststoffspritzmasse zumindest teilweise bedeckt wird, wobei die Transferfolie (1) in wenigstens einer Spritzgussform angeordnet wird und die wenigstens eine Spritzgussform mit wenigstens einer Kunststoffspritzmasse gefüllt wird, wobei die Kunststoffspritzmasse einen thermoplastischen Kunststoff, einen duroplastischen Kunststoff oder eine Mischung davon umfasst.

15. Folienbeschichteter Artikel (2) hergestellt durch ein Verfahren nach einem der Ansprüche 1 bis 14, umfassend ein Substrat (S) und wenigstens eine, an wenigstens einer Oberfläche des Substrates (S) zumindest teilweise angeordnete Übertragungslage (13, 13', 13"), die wenigstens ein Dekorelement enthält,
wobei die von dem Substrat (S) abgewandten Seite der Übertragungslage (13, 13', 13") durch wenigstens eine Oberschicht (15) gebildet ist, auf die wenigstens eine Schutzschicht (20), die wenigstens einen Kunststoff auf Basis eines Polyurethans umfasst, mit einer Dicke aus einem Bereich von 0,2 mm bis 5 mm angeordnet ist, wobei die wenigstens eine Schutzschicht (20) auf der wenigstens einen Oberschicht (15) mit einer Haftkraft, bestimmt gemäß der in DIN EN ISO 4624: 2016-08 beschriebenen Methode, aus einem Bereich von 2,5 MPa bis 10 MPa, vorzugsweise von 2,5 MPa bis 5 MPa, haftet, und wobei das Substrat (S) vorzugsweise aus der Gruppe, die aus Papier, Kunststoff, Holz, Composite, Glas, Metall und Kombinationen davon besteht, ausgewählt wird.

## Claims

1. Method for producing a film-coated article (2) using a transfer film (1), wherein the transfer film (1) comprises a carrier ply (10, 10') and a transfer ply (13, 13', 13") arranged on the carrier ply (10, 10'), said transfer ply containing at least one decorative element (4), wherein the method comprises the following steps:
a) connecting a substrate (S) to at least one surface of the transfer ply (13, 13', 13") facing away from the carrier ply (10, 10'), and
b) removing the carrier ply (10, 10') from the transfer ply (13, 13', 13") bound to the substrate (S),
c) applying at least one protective layer (20) onto a surface of the transfer ply (13, 13', 13") opposite the substrate (S),
wherein the transfer ply (13, 13', 13"), adjacent to the carrier ply (10, 10') has at least one upper layer (15), which is at least regionally not yet completely cured, and which at least partially forms the surface of the transfer ply (13, 13', 13") opposite the substrate (S), wherein the at least one decorative element is arranged on the side of the at least one upper layer (15) of the transfer ply (13, 13', 13") facing away from the carrier ply (10, 10'), and **characterised in that**
the application of the at least one protective layer (20) onto the surface of the transfer ply (13, 13', 13") in step c) is carried out by at least partially flooding and/or dousing the at least one upper layer (15) with at least one composition made of polyurethane precursors (2K-PUR systems) and subsequently curing, preferably at a temperature from a range of from 25°C to 180°C,
wherein the at least one protective layer (20) adheres to the at least one upper layer (15) of the transfer ply (13, 13', 13") after curing with an adhesive force, determined according to the method described in DIN EN ISO 4624: 2016-08, at a range of from 2.5MPa to 10MPa.

2. Method according to claim 1,
**characterised in that**
the carrier ply (10, 10') is at least one carrier layer (11) made of a polyester, a polyolefin or a combination thereof, in particular made of PET.

3. Method according to claim 2,
**characterised in that**
the at least one upper layer (15) that has at least regionally not yet completely cured has a thickness of from 0.5 µm to 15 µm.

4. Method according to one of claims 2 or 3,
**characterised in that**
the at least one upper layer (15) that has at least regionally not yet completely cured comprises at least one binder, which is selected from the group, which consists of polyurethane resins, polyurethane dispersals, acryl resins, methacrylic resins, phenol resins, epoxy resins, polyureas, melamine resins, aminoplasts, polyester resins, alkyd resins, polyamide resins, vinyl ester resins and mixtures thereof, or consists thereof.

5. Method according to one of claims 2 to 4,
**characterised in that**
a first adhesion agent layer (17) is arranged between the at least one upper layer (15) that has at least regionally not yet completely cured and the at least one decorative element, said adhesion agent layer preferably comprising at least one acryl resin or consists thereof and further preferably has a layer thickness of from 0.1 µm to 10 µm.

6. Method according to one of claims 2 to 5,
**characterised in that**
the at least one decorative element is arranged in at least one decorative layer (14), which comprises a UV-crosslinked lacquer or a layer that can be deformed thermoplastically and which is unpigmented or pigmented or dyed.

7. Method according to one of claims 2 to 6,
**characterised in that**
the at least one decorative layer (14) containing at least one decorative element is selected from the group which consists of transparent and/or coloured lacquer layers, in particular comprising one or more dyes and/or pigments, replication layers with a modelled optically active surface structure, reflection layers, in particular opaque reflection layers, transparent reflection layers, metallic reflection layers or dielectric reflection layers, optically variable layers, optically active layers, interference multi-layer systems, volume hologram layers, liquid crystal layers, in particular cholesteric liquid crystal layers, electrically conductive layers, antenna layers, electrode layers, magnetic layers, magnetic memory layers, barrier layers and combinations thereof.

8. Method according to one of claims 2 to 7,
**characterised in that**
the transfer film (1) has at least one detachment layer (12) with a layer thickness of from 0.1 nm to 50 nm, which is arranged between the carrier layer (11) and the at least one upper layer (15) and preferably comprises at least one wax or consists thereof.

9. Method according to one of claims 2 to 8,
**characterised in that**
the transfer film (1) has at least one lacquer layer (16) with a layer thickness of from 0.5 µm to 10 µm, which is arranged on the surface of the transfer ply (13, 13', 13") facing away from the transfer ply (10, 10'), wherein the at least one lacquer layer (16) preferably comprises an adhesive, which is selected from the group, which consists of physically curing adhesives, chemically curing adhesive, sticking adhesive or a mixture thereof, or consists thereof.

10. Method according to one of claims 2 to 9,
**characterised in that**
the transfer ply (10, 10') is arranged on the at least one upper layer (15) with an adhesion force from a range of from 2 cN to 50 cN, preferably from a range of from 5 cN to 35 cN.

11. Method according to one of claims 1 to 10,
**characterised in that**
the application of the at least one protective layer (20) onto the at least one upper layer (15) in step c) is carried out by open flooding, flooding in a casting tool or flooding in a 2K tool.

12. Method according to one of claims 1 to 11,
**characterised in that,**
before and/or during and/or after applying the at least one protective layer (20) in step c), the at least one protective layer (20) is modified and/or structured, preferably by depositing/applying particles onto the at least one upper layer (15) after step b) and/or by using tool structures during the application in step c) and/or by subsequently lasering, overprinting and/or superimposing the at least one protective layer (20).

13. Method according to one of claims 1 to 12,
**characterised in that**,
in step a), connecting a substrate (S) to at least one surface of the transfer ply (13, 13', 13") of the transfer film (1) facing away from the carrier ply (10, 10') is carried out by adhesion, hot stamping, lamination or combinations thereof onto at least one surface of a substrate (S), which is selected from the group, which of paper, plastic, wood, composites, glass, metal and combinations thereof.

14. Method according to one of claims 1 to 13,
**characterised in that,**
in step a) when connecting a substrate (S) to at least one surface of the transfer ply (13, 13', 13") of the transfer film (1) facing away from the carrier ply (10, 10'), the surface of the transfer ply (13, 13', 13") facing away is covered at least partially with at least one plastic sprayed material, wherein the transfer film (1) is arranged in at least one injection mould, and the at least one injection mould is filled with at least one plastic sprayed material, wherein the plastic sprayed material comprises a thermoplastic plastic, a duroplastic plastic or a mixture thereof.

15. Film-coated article (2) produced by a method according to one of claims 1 to 14, comprising a substrate (S) and at least one transfer ply (13, 13', 13") at least partially arranged on at least one surface of the substrate (S), said transfer ply containing at least one decorative element, wherein the side of the transfer ply (13, 13', 13") facing away from the substrate (S) is formed by at least one upper layer (15), on which upper layer at least one protective layer (20), which comprises at least one plastic based on a polyurethane, with a thickness from the range of from 0.2mm to 5mm is arranged, wherein the at least one protective layer (20) adheres to the at least one upper layer (15) with an adhesion force, determined according to the method described in DIN EN ISO 4624: 2016-08, from a range of from 2.5 MPa to 10 MPa, preferably of from 2.5 MPa to 5 MPa, and wherein the substrate (S) is preferably selected from the group, which consists of paper, plastic, wood, composite, glass, metal and combinations thereof.

## Revendications

1. Procédé de fabrication d'un article revêtu d'un film (2) en utilisant un film de transfert (1), dans lequel le film de transfert (1) comprend une strate de support (10, 10') et une strate de transfert (13, 13', 13'') disposée sur la strate de support (10, 10'), qui contient au moins un élément décoratif (4), dans lequel le procédé comprend des étapes suivantes :
a) de liaison d'un substrat (S) à au moins une surface de la strate de transfert (13, 13', 13") opposée à la strate de support (10, 10'), et
b) de retrait de la strate de support (10, 10') de la strate de transfert (13, 13', 13'') fixée sur le substrat (S),
c) d'application d'au moins une couche de protection (20) sur une surface, faisant face au substrat (S), de la strate de transfert (13, 13', 13"),
dans lequel la strate de transfert (13, 13', 13") présente, jouxtant la strate de support (10, 10'), au moins une couche supérieure (15), qui n'est pas encore totalement durcie au moins par endroits, et qui forme au moins en partie la surface, faisant face au substrat (S), de la strate de transfert (13, 13', 13"), dans lequel l'au moins un élément décoratif est disposé sur le côté, opposé à la strate de support (10, 10'), de l'au moins une couche supérieure (15) de la strate de transfert (13, 13', 13''), et **caractérisé en ce que**
l'application de l'au moins une couche de protection (20) sur la surface de la strate de transfert (13, 13', 13") est effectuée par submersion et/ou par surmoulage au moins partiel(le) de l'au moins une couche supérieure (15) avec au moins une composition composée de précurseurs de polyuréthane (systèmes PUR à deux composants) puis par durcissement consécutif de préférence à une température issue d'une plage de 25 °C à 180 °C,
dans lequel l'au moins une couche de protection (20) adhère à l'au moins une couche supérieure (15) de la strate de transfert (13, 13', 13") après le durcissement avec une force d'adhérence, définie selon la méthode décrite dans la norme DIN EN ISO 4624:2016-08, d'une plage de 2,5 Mpa à 10 Mpa.

2. Procédé selon la revendication 1,
**caractérisé en ce**
**que** la strate de support (10, 10') est au moins une couche de support (11) composée d'un polyester, d'une polyoléfine ou d'une combinaison de ceux-ci, en particulier de PET.

3. Procédé selon la revendication 2,
**caractérisé en ce**
**que** l'au moins une couche supérieure (15) pas encore totalement durcie au moins par endroits présente une épaisseur de 0,5 µm à 15 µm.

4. Procédé selon l'une quelconque des revendications 2 ou 3,
**caractérisé en ce**
**que** l'au moins une couche supérieure (15) pas encore totalement durcie au moins par endroits comprend au moins un liant, qui est choisi parmi le groupe, qui est constitué de résines de polyuréthanes, de dispersions de polyuréthane, de résines acryliques, de résines métacryliques, de résines phénoliques, de résines époxy, de polyurées, de résines de mélamine, d'aminoplates, de résines de polyester, de résines alkyde, de résines de polyamide, des résines de vinylester et de mélanges de celles-ci, ou en est constituée.

5. Procédé selon l'une quelconque des revendications 2 à 4,
**caractérisé en ce**
**qu'**est disposée entre l'au moins une couche supérieure (15) pas encore totalement durcie au moins par endroits et l'au moins un élément décoratif une première couche de promoteur d'adhérence (17), qui comprend de préférence au moins une résine acrylique ou en est constituée et présente par ailleurs de manière préférée une épaisseur de couche de 0,1 µm à 10 µm.

6. Procédé selon l'une quelconque des revendications 2 à 5,
**caractérisé en ce**
**que** l'au moins un élément décoratif est disposé dans au moins une couche décorative (14), qui comprend un vernis réticulé aux UV ou une couche déformable de manière thermoplastique et qui est sans pigment ou est pigmentée ou est colorée.

7. Procédé selon l'une quelconque des revendications 2 à 6,
**caractérisé en ce**
**que** l'au moins une couche décorative (14) contenant au moins un élément décoratif est choisie parmi le groupe, qui est constitué de couches de vernis transparentes et/ou colorées, comprenant en particulier un ou plusieurs colorants et/ou pigments, de couches de réplication avec une structure de surface optiquement active déformée, de couches réfléchissantes, en particulier de couches réfléchissantes opaques, de couches réfléchissantes transparentes, de couches réfléchissantes métalliques ou de couches réfléchissantes diélectriques, de couches optiquement variables, de couches optiquement actives, de systèmes multicouches d'interférence, de couches d'hologramme volumique, de couches à cristaux liquides, en particulier de couches à cristaux liquides cholestériques, de couches électriquement conductrices, de couches d'antenne, de couches d'électrodes, de couches magnétiques, de couches de stockage magnétiques, de couches barrières et de combinaison de celles-ci.

8. Procédé selon l'une quelconque des revendications 2 à 7,
**caractérisé en ce**
**que** le film de transfert (1) présente au moins une couche décollable (12) avec une épaisseur de couche de 0,1 nm à 50 nm, qui est disposée entre la couche de support (11) et l'au moins une couche supérieure (15) et comprend de préférence au moins une cire ou en est constituée.

9. Procédé selon l'une quelconque des revendications 2 à 8,
**caractérisé en ce**
**que** le film de transfert (1) présente au moins une couche de vernis (16) avec une épaisseur de couche de 0,5 µm à 10 µm, qui est disposée sur la surface, opposée à la strate de support (10, 10'), de la strate de transfert (13, 13', 13''), dans lequel l'au moins une couche de vernis (16) comprend de préférence au moins une colle, qui est choisie parmi le groupe, qui est constitué de colles durcissant physiquement, de colles durcissant chimiquement, d'adhésifs ou d'un mélange de ceux-ci, ou en est constituée.

10. Procédé selon l'une quelconque des revendications 2 à 9,
**caractérisé en ce**
**que** la strate de support (10, 10') est disposée sur l'au moins une couche supérieure (15) avec une force d'adhérence issue d'une plage de 2 cN à 50 cN, de préférence issue d'une plage de 5 cN à 35 cN.

11. Procédé selon l'une quelconque des revendications 1 à 10,
**caractérisé en ce**
**que** l'application de l'au moins une couche de protection (20) sur l'au moins une couche supérieure (15) est effectuée à l'étape c) par immersion franche, immersion dans un outil de moulage ou immersion dans un outil à deux composants.

12. Procédé selon l'une quelconque des revendications 1 à 11,
**caractérisé en ce**
**qu'**avant et/ou pendant et/ou après l'application de l'au moins une couche de protection (20) à l'étape c), l'au moins une couche de protection (20) est modifiée et/ou structurée, de préférence par insertion/pose de particules sur l'au moins une couche supérieure (15) après l'étape b) et/ou en utilisant des structures d'outil pendant l'application à l'étape c) et/ou par application de laser, surpression et/ou surimpression ultérieurement de l'au moins une couche de protection (20) .

13. Procédé selon l'une quelconque des revendications 1 à 12,
**caractérisé en ce**
**qu'**à l'étape a), la liaison d'un substrat (S) à au moins une surface, opposée à la strate de support (10, 10'), de la strate de transfert (13, 13', 13'') du film de transfert (1) est effectuée par collage, estampage à chaud, laminage ou des combinaisons de ceux-ci sur au moins une surface d'un substrat (S), qui est choisi parmi le groupe, qui est constitué de papier, de matière plastique, de bois, de composite, de verre, de métal et de combinaisons de ceux-ci.

14. Procédé selon l'une quelconque des revendications 1 à 13,
**caractérisé en ce**
**qu'**à l'étape a), lors de la liaison d'un substrat (S) à au moins une surface, opposée à la strate de support (10, 10'), de la strate de transfert (13, 13', 13'') du film de transfert (1), la surface opposée de la strate de transfert (13, 13', 13'') est recouverte au moins en partie d'au moins une matière d'injection en matière plastique, dans lequel le film de transfert (1) est disposé dans au moins un moule de moulage par injection et l'au moins un moule de moulage par injection est rempli d'au moins une matière d'injection en matière plastique, dans lequel la matière d'injection en matière plastique comprend une matière synthétique thermoplastique, une matière thermodurcissable ou un mélange de celles-ci.

15. Article revêtu par un film (2) fabriqué par un procédé selon l'une quelconque des revendications 1 à 14, comprenant un substrat (S) et au moins une strate de transfert (13, 13', 13") disposée au moins en partie sur au moins une surface du substrat (S), qui contient au moins un élément décoratif, dans lequel le côté, opposé au substrat (S), de la strate de transfert (13, 13', 13'') est formé par au moins une couche supérieure (15), sur laquelle au moins une couche de protection (20), qui comprend au moins une matière plastique à base de polyuréthane, est disposée avec une épaisseur issue d'une plage de 0,2 mm à 5 mm, dans lequel l'au moins une couche de protection (20) adhère à l'au moins une couche supérieure (15) avec une force d'adhérence, définie selon la méthode décrite dans la norme DIN EN ISO 4624:2016-08, issue d'une plage de 2,5 MPa à 10 MPa, de préférence de 2,5 MPa à 5 MPa, et dans lequel le substrat (S) est choisi de préférence parmi le groupe, qui est constitué de papier, de matière plastique, de bois, de composite, de verre, de métal et de combinaisons de ceux-ci.
